# FASCICULE DE BREVET EUROPEEN

(11) **EP 3 247 689 B1**
(45) Date de publication et mention de la délivrance du brevet: **21.11.2018**
(21) Numéro de dépôt: 16701305.1
(22) Date de dépôt: 21.01.2016
(51) Int. Cl.: C04B 35/195, C04B 35/626, C04B 35/64, C04B 35/80

(54) **PROCÉDÉ DE PRÉPARATION D'UN MATÉRIAU À BASE D'ALUMINOSILICATE, ET D'UN MATÉRIAU COMPOSITe À MATRICE EN ALUMINOSILICATE**
VERFAHREN ZUR HERSTELLUNG EINES AUF ALUMINIUMSILIKAT BASIERENDEN MATERIALS, UND EINES AUF ALUMINIUMSILIKAT BASIERENDEN VERBUNDMATERIALS
PROCESS FOR THE MANUFACTURING OF AN ALUMINOSILICATE-BASED MATERIAL, AND OF AN ALUMINOSILICATE-BASED COMPOSITE MATERIAL

(30) Priorité: 23.01.2015 FR 1550541
(43) Date de publication de la demande: 29.11.2017
(73) Titulaire: Commissariat à l'énergie atomique et aux énergies alternatives, 75015 Paris (FR); Centre National de la Recherche Scientifique, 75016 Paris (FR)
(72) Inventeur: ALLEMAND, Alexandre, 33000 Bordeaux (FR); BELLEVILLE, Philippe, 37000 Tours (FR); LE PETITCORPS, Yann, 33850 Leognan (FR); BILLARD, Romain, 51200 Epernay (FR); DOLLE, Mickael, 80260 Flesselles (FR)
(74) Mandataire: Brevalex
(86) Numéro de dépôt international: PCT/EP2016/051241
(87) Numéro de publication internationale: WO 2016/116564

(56) Documents cités:
- EP-A1- 2 371 786
- WO-A1-2014/079837
- JP-A- S6 271 535
- US-A1- 2009 269 573
- Romain Billard, Alexandre Allemand, Yann Le Petitcorps: "Recueil des Résumés - Colloque 17", Conférence pluridisciplinaire sur les matériaux 2014 , 24 novembre 2014 (2014-11-24), XP055228878, Extrait de l'Internet: URL:https://apps.key4events.com/key4regist er/images/client/239/files/RecueilRésumés_ 17.pdf [extrait le 2015-11-17]

## Description

### DOMAINE TECHNIQUE

L'invention concerne un procédé de préparation d'un matériau à base d'aluminosilicate.

Plus exactement, l'invention concerne un procédé de préparation d'un matériau à base d'un aluminosilicate choisi parmi l'aluminosilicate de baryum BAS, l'aluminosilicate de baryum et de strontium BSAS, et l'aluminosilicate de strontium SAS.

Par matériau à base d'aluminosilicate, on entend généralement un matériau comprenant 80% en masse ou plus, de préférence encore 100% en masse d'aluminosilicate tel que l'aluminosilicate de baryum.

L'aluminosilicate de Baryum que l'on peut définir comme un matériau céramique de type oxyde répond à la formule BaAl₂Si₂O₈ et est aussi généralement désigné par l'abréviation BAS qui sera utilisée dans ce qui suit.

L'invention concerne, en outre, un procédé de préparation d'un matériau composite à matrice en aluminosilicate, notamment en aluminosilicate de baryum renforcé par des renforts en oxyde de métal.

Le matériau composite ainsi préparé trouve notamment son application dans le domaine aéronautique ou aérospatial, par exemple pour la fabrication de radomes.

### ÉTAT DE LA TECHNIQUE ANTÉRIEURE

Le BAS présente de nombreuses propriétés qui en font un matériau intéressant pour de multiples applications. Ainsi, le BAS est connu pour avoir un coefficient de dilatation thermique faible [1] une excellente tenue à l'oxydation et à la réduction [1], des propriétés diélectriques stables [2], une forte opacité aux rayons X [3], et une température de fusion élevée de l'ordre de 1760°C.

Le BAS peut être mis sous la forme d'un monolithe ou bien il peut être intégré dans un matériau composite [4] & [4A].

Le BAS se rencontre dans la littérature sous deux formes cristallines principales, à savoir : la forme « Celsian » ou monoclinique, et la forme « Hexacelsian » (structure hexagonale du Celsian) ou hexagonale. Il existe aussi une structure orthorhombique mineure.

La forme Celsian, monoclinique est stable jusqu'à 1590°C et bénéficie d'un faible coefficient de dilatation thermique (de 2,3 10⁻⁶ °C⁻¹ pour sa forme vitrocéramique [5] à 4,5.10⁻⁶ °C⁻¹ pour sa forme monolithique [6]).

Ce faible coefficient de dilatation thermique rend cette forme monoclinique compatible avec les matériaux tels que le SiC ou le Si₃N₄ [7]. Cependant, c'est la forme Hexacelsian, hexagonale qui se forme principalement dans des conditions normales, sans ajouts de type Sr, Ca, Mg, Li...

La forme Hexacelsian, hexagonale est stable entre 1590°C et 1750°C et devient métastable entre 300°C et 1590°C.

Cette forme hexagonale a un coefficient de dilatation bien plus important (8.10⁻⁶ °C⁻¹), et de ce fait elle n'est pas compatible avec les renforts précités. Par contre, ce coefficient de dilatation est beaucoup plus proche de celui de l'alumine, par exemple, qui est voisin de 8.10⁻⁶ °C⁻¹.

Par ailleurs, la forme Hexacelsian présente un polymorphisme vers 300°C. Le réseau passe d'une structure hexagonale à une structure orthorhombique avec une variation en volume de l'ordre de 3%.

Cependant, il est possible de faire une trempe pour figer la structure hexagonale [8].

Parmi les procédés de préparation, élaboration du BAS, on peut distinguer les procédés de préparation classiques et les procédés de préparation, élaboration à partir d'hydroxyde.

### • Procédés de préparation classiques.

Une grande variété de procédés ont été étudiés et développés pour synthétiser du BAS.

L'objectif de la quasi-totalité des procédés étudiés est d'obtenir du BAS sous la forme monoclinique appelée « Celsian ».

Le document de Kuo-Tong Lee et *al.* [9] donne un aperçu complet de l'ensemble des procédés de préparation du BAS.

D'après ce document qui analyse une trentaine de travaux antérieurs, il est possible d'élaborer du BAS par un procédé sol-gel, par frittage d'un mélange d'oxydes, par oxydation d'un métal solide, ou bien par un procédé classique d'élaboration des verres.

Le tableau 1 suivant issu du document de Kuo-Tong Lee [9] résume les caractéristiques des principaux procédés utilisés pour préparer le BAS.

Ainsi le Tableau 1 indique les divers précurseurs et traitements thermiques utilisés dans chacun de ces procédés, et la(les) phase(s) présente(s) dans le produit final obtenu à l'issue de chacun de ces procédés.

**Tableau 1**

| ***Précurseur(s)*** | ***Traitement thermique*** | ***Phase(s) présente(s)**** |
|---|---|---|
| **Verres de BAS fondu** | 1290°C pendant 4 h | H |
| Idem + 5% masse LiO₂ | 1220°C pendant 4 h | C (M) + mullite + verre |
| Verre fondu de BAS compressé à froid | 1300°C pendant 20 h | C |
| **Gel de BAS** | 1080°C | H (m) + verre |
| idem | 1320°C pendant 4 semaines | C |
| Idem + 2,5% mol. LiO₂ | 1100°C pendant 2 min | C |
| Idem + 5% masse LiO₂ | 1020°C | C |
| **Kaolin + BaCO₃** | 1350°C pendant 24 h | C |
| Idem + 5% mol. LiF | 1200°C pendant 6 h | C |
| **BaCO₃ + Al₂O₃ + SiO₂** | 1250°C pendant 5 h | H |
| idem | 1500°C pendant 150 h | C |
| **Topaze + BaCO₃** | 900°C | C |
| **Zéolithe dopée au Ba** | 950°C pendant 4 h | H(m) + verre |
| idem | 1550°C pendant 20 h | C |
| Ba+Al+Al₂O₃+SiO₂ | 1200°C pendant 35 h | H(m) + BaAl₂O₄ |
| idem | 1580°C pendant 35 h | H + C(M) |

| | | |
|---|---|---|
| * : H = Hexacelsian, C = Celsian, M = phase majoritaire, m = phase minoritaire | | |

Les travaux exposés dans le document [9] susmentionné, dans un autre document de Kuo-Tong Lee (document [10]), ainsi que dans le document de I.G. Talmy [11] mettent en avant l'intérêt d'utiliser des précurseurs sous forme de poudres d'alumine Al₂O₃, de silice SiO₂, et de carbonate de baryum BaCO₃. Les phases de BAS les plus pures sont obtenues après deux traitements thermiques successifs.

Ainsi, dans ces procédés de préparation du BAS qui comprennent deux traitements thermiques successifs, une première étape consiste à mélanger les poudres de BaCO₃ et de SiO₂ et à traiter ce mélange à 1150°C pendant 4 heures. Une seconde étape consiste à récupérer le composé formé à l'issue de la première étape, et à le mélanger avec Al₂O₃ puis à traiter le tout à 1200°C pendant 6 heures. Les deux traitements thermiques se font en four tubulaire sous air. Ce procédé donne un BAS sous forme hexagonale cristallisé quasiment pur. Il est possible d'obtenir la forme Celsian en effectuant un troisième traitement thermique entre 1200°C et 1530°C pendant plusieurs heures.

Ce procédé est mis en oeuvre dans les documents [4] et [4A], pour préparer une poudre d'aluminosilicate, notamment de BAS comprenant en majorité en masse du BAS de structure hexagonale, qui est utilisé pour réaliser des matériaux composites constitués par une matrice en aluminosilicate de baryum renforcée par des renforts en un oxyde de métal ou de métalloïde.

La plupart des procédés exposés dans ce qui précède présentent l'inconvénient majeur lorsque l'on souhaite préparer préférentiellement du BAS de structure hexagonale de nécessiter deux étapes successives de traitement thermique réalisées en four tubulaire sous air.

Deux documents plus récents mettent en oeuvre des cendres volantes de charbon (« *Coal Fly Ash* » ou CFA en anglais) [3] [12]. Les « CFA » sont des déchets des centrales à charbon qui contiennent principalement, comme composés chimiques, de la silice et de l'alumine sous forme de mullite (Al₆Si₂O₁₃) et de quartz, ainsi qu'une phase amorphe.

Le document de Long-Gonzalez [12] montre qu'il est possible de synthétiser en une seule étape du BAS sous forme Celsian ou sous forme Hexacelsian. La substitution du Ba par du Sr favorise la formation de la forme Celsian au détriment de la forme Hexacelsian.

Le procédé de fabrication de ce document consiste à mélanger les CFA avec de l'alumine et du carbonate de baryum (éventuellement du carbonate de strontium) puis à presser à froid ce mélange dans une presse unidirectionnelle. Les échantillons obtenus sont ensuite traités thermiquement pendant 5 heures dans une plage de températures comprise entre 850°C et 1300°C . Ce procédé présente l'inconvénient majeur de donner des échantillons multiphasés, avec notamment du BaSiO₃, du Ba₂SiO₄, du BaSi₂O₅, ainsi que toutes les impuretés initialement présentes dans les cendres.

### • Procédés de préparation à partir d'hydroxyde.

Un seul document traitant de l'élaboration du BAS à partir d'hydroxyde d'aluminium a été trouvé.

Il s'agit du document JP-A-S62-71535 de Nagamine Shogo [13]. Dans ce document, un mélange intime de particules de BAS et de BaAl₁₂O₁₉ est obtenu à partir d'hydroxyde d'aluminium et d'un composé riche en Ba capable de donner un oxyde. Ces deux constituants sont traités thermiquement dans une première étape pour donner du BaAl₁₂O₁₉. Ensuite, dans une seconde étape, le BaAl₁₂O₁₉ est mélangé soit avec du Kaolin, soit avec du BAS (sous forme monoclinique), soit avec du feldspath. Ce mélange est traité à température élevée pour donner un mélange de particules de BAS et de BaAl₁₂O₁₉. Ce matériau sert comme support de catalyseur car il est extrêmement réfractaire.

Ce procédé présente l'inconvénient majeur de donner des échantillons non homogènes avec la présence de BaAl₁₂O₁₉.

Il existe donc, au regard de ce qui précède, un besoin pour un procédé de préparation d'un matériau à base d'un aluminosilicate, ledit aluminosilicate tel que du BAS étant constitué (100% en masse) d'aluminosilicate de structure hexagonale, qui comprenne un nombre limité d'étapes de traitement thermique, de préférence une seule étape de traitement thermique.

Il existe aussi un besoin pour un procédé de préparation d'un matériau à base d'un aluminosilicate, tel que l'aluminosilicate de baryum, ledit aluminosilicate tel que du BAS étant constitué (100% en masse) d'aluminosilicate de structure hexagonale, qui permette d'obtenir un matériau homogène comprenant par exemple au moins 80% en masse d'aluminosilicate, tel que l'aluminosilicate de baryum, dense, et non fissuré.

Le but de la présente invention est, entre autres, de répondre à ces besoins.

Le but de la présente invention est encore de fournir un procédé de préparation d'un matériau à base d'un aluminosilicate, tel que l'aluminosilicate de baryum, ledit aluminosilicate tel que du BAS étant constitué (100% en masse) d'aluminosilicate de structure hexagonale qui ne présente pas les inconvénients, limitations, défauts, et désavantages des procédés de l'art antérieur tels que les procédés exposés plus haut, et qui résolve les problèmes de ces procédés.
Le résumé de Romain Billard et Al. dans le "Recueil des Résumés - Colloque 17", Conférence pluridisciplinaire sur les matériaux (24 nov. 2014) décrit la synthèse d'un matériau dense à base de BAS en une seule étape de frittage SPS et mentionne un mélange comprenant BaCO₃, SiO₂ et une source alumineuse autre que Al₂O₃, mais ne mentionne pas Al(OH)₃. Ce document divulgue également l'obtention d'un composite à matrice BAS renforcée par des fibres d'Al₂O₃.

### EXPOSÉ DE L'INVENTION

Ce but, et d'autres encore, sont atteints, conformément à l'invention par un procédé de préparation d'un matériau à base d'un aluminosilicate choisi parmi l'aluminosilicate de baryum BAS, l'aluminosilicate de baryum et de strontium BSAS, et l'aluminosilicate de strontium SAS, ledit aluminosilicate étant constitué d'aluminosilicate de structure hexagonale, caractérisé en ce qu'il comprend une seule étape de frittage dans laquelle on réalise le frittage d'un mélange de poudres de précurseurs dudit aluminosilicate, comprenant une poudre d'hydroxyde d'aluminium Al(OH)₃, par une technique de frittage à chaud avec un champ électrique pulsé SPS ; moyennant quoi on obtient un matériau à base d'un aluminosilicate, ledit aluminosilicate étant constitué d'aluminosilicate de structure hexagonale.

L'aluminosilicate est donc choisi parmi l'aluminosilicate de baryum BAS, l'aluminosilicate de baryum et de strontium BSAS, et l'aluminosilicate de strontium SAS.

Par mélange de poudres de précurseurs de l'aluminosilicate, on entend un mélange de poudres de composés qui lors du frittage par SPS réagissent entre elles pour donner l'aluminosilicate.

L'homme du métier peut facilement choisir en fonction de l'aluminosilicate à obtenir les poudres de précurseurs adéquates qui donneront l'aluminosilicate souhaité lors du frittage par SPS, sachant que, selon l'invention, le mélange de poudres de précurseurs comprend obligatoirement une poudre d'hydroxyde d'aluminium Al(OH)₃.

Les poudres de précurseurs autres que la poudre d'hydroxyde d'aluminium Al(OH)₃ peuvent être choisies parmi les poudres de carbonate de baryum BaCO₃, de silice SiO₂, et de carbonate de strontium.

Généralement, le mélange de poudres de précurseurs peut ne pas comprendre d'alumine.

De préférence, l'aluminosilicate est l'aluminosilicate de baryum BAS et le mélange de poudres de précurseurs comprend alors, de préférence consiste en, un mélange d'une poudre de carbonate de baryum BaCO₃, d'une poudre de silice SiO₂, et d'une poudre d'hydroxyde d'aluminium Al(OH)₃

Le procédé selon l'invention n'a jamais été décrit ou suggéré dans l'art antérieur tel que représenté notamment par les documents étudiés plus haut.

Le procédé selon l'invention se distingue fondamentalement des procédés de préparation de BAS de l'art antérieur par au moins trois caractéristiques essentielles.

Selon une première caractéristique, le procédé selon l'invention comprend une seule étape de traitement thermique, en d'autres termes une étape unique de traitement thermique, réalisée par SPS, au cours de laquelle on obtient directement l'aluminosilicate, tel que le BAS, souhaité.

Du fait qu'il comprend une étape unique de traitement thermique, le procédé selon l'invention surmonte ainsi l'un des problèmes principaux des procédés de l'art antérieur qui mettent en oeuvre deux étapes successives de traitement thermique.

Selon une deuxième caractéristique du procédé selon l'invention, l'aluminosilicate, tel que le BAS, est préparé à partir d'un mélange spécifique de poudres de précurseurs, à savoir un mélange de poudres de précurseurs caractérisé en ce qu'il comprend une poudre d'hydroxyde d'aluminium Al(OH)₃.

Par exemple, dans le cas où l'on prépare un matériau à base de BAS, le mélange de poudres de précurseurs est un mélange d'une poudre de carbonate de baryum BaCO₃, d'une poudre de silice SiO₂, et d'une poudre d'hydroxyde d'aluminium Al(OH)₃.

Enfin, selon une troisième caractéristique du procédé selon l'invention, l'étape unique de traitement thermique est réalisée par une technique spécifique, à savoir une technique de frittage à chaud avec un champ électrique pulsé SPS.

La préparation de BAS, *a fortiori* de BAS comprenant en majorité en masse de l'aluminosilicate de baryum de structure hexagonale à partir d'hydroxyde d'aluminium Al(OH)₃, n'est ni décrite, ni suggérée dans l'art antérieur.

En d'autres termes, l'utilisation d'hydroxyde d'aluminium en tant que produit de départ, précurseur, pour la préparation de BAS n'est ni décrite ni suggérée dans l'art antérieur.

De manière étonnante, c'est précisément l'hydroxyde d'aluminium, qui mélangé à d'autres précurseurs, tels que le carbonate de baryum BaCO₃ et la silice SiO₂, par exemple la silice cristallisée, que l'on peut qualifier de précurseurs classiques, permet, grâce au traitement thermique par SPS, d'obtenir en une seule étape un matériau à base d'un aluminosilicate, tel que le BAS, et surtout un matériau à base d'un aluminosilicate, tel que le BAS, dans lequel le BAS est constitué par l'aluminosilicate de structure hexagonale, et ledit matériau étant homogène, dense et non fissuré.

La préparation d'un aluminosilicate, tel que le BAS en utilisant la technique de frittage à chaud avec un champ électrique pulsé (« *Spark Plasma Sintering* » ou « SPS » en anglais) n'a pas été décrite dans l'art antérieur. *A fortiori*, la préparation d'un aluminosilicate, tel que le BAS de structure hexagonale en utilisant la technique de SPS, et en mettant en oeuvre un mélange de poudres spécifique contenant de l'hydroxyde d'aluminium, n'a pas été décrite dans l'art antérieur.

Il existe des documents qui décrivent l'élaboration par la technique de SPS de matériaux composites à matrice BAS et à renforts en Si₃N₄ [7] ou bien à renforts en oxyde de métal [4] et [4A].

Mais dans ces documents, la technique de SPS est utilisée pour préparer des matériaux composites à partir de BAS préalablement synthétisés et non pour préparer ce BAS.

Le document de Feng Ye [7] consiste à faire croître des grains allongés de Si₃N₄ dans une matrice vitreuse de BAS. Un traitement thermique classique est nécessaire pour faire ensuite cristalliser le BAS. Dans le matériau obtenu, le BAS est minoritaire, il représente 30% massique.

Dans les documents [4] et [4A], la technique de SPS est utilisée pour densifier un mélange de poudre d'aluminosilicate, notamment de BAS préalablement préparé, et de renforts en oxyde de métal et préparer ainsi un matériau composite. Le BAS utilisé est du BAS obtenu par un procédé classique de double traitement thermique, identique au procédé décrit dans le document [10], et non du BAS obtenu par une technique de SPS.

Finalement il n'y a aucune mention, ni aucune suggestion dans l'art antérieur qu'un aluminosilicate de baryum, tel que le BAS, puisse être élaboré en une seule étape par SPS à partir d'hydroxyde d'aluminium. De manière surprenante, c'est justement l'utilisation d'hydroxyde d'aluminium en tant que précurseur de l'aluminosilicate, tel que le BAS, associé à la mise en oeuvre de la technique de SPS, qui permet pour la première fois, la synthèse en une seule étape d'un aluminosilicate tel que le BAS, qui permet en outre d'obtenir un aluminosilicate tel que le BAS constitué par l'aluminosilicate de structure hexagonale, et qui enfin permet de préparer un matériau à base d'un aluminosilicate, tel que le BAS, homogène (par homogène on entend que le matériau selon l'invention comprend au moins 80% en masse d'aluminosilicate, tel que l'aluminosilicate de baryum, et que cet aluminosilicate est uniformément réparti dans l'ensemble du matériau), dense (par dense on entend que le matériau selon l'invention présente généralement une densité supérieure à 95% de la densité théorique), et non fissuré.

Autrement dit, on a montré selon l'invention que, de manière étonnante, pour obtenir en une seule étape un aluminosilicate tel que le BAS, il était nécessaire d'utiliser de l'hydroxyde d'aluminium et un frittage par SPS.

Il a été mis en évidence, de manière surprenante, selon l'invention, que l'association de ce précurseur spécifique et de cette technique de frittage spécifique permettait d'obtenir en une seule étape de frittage un matériau à base d'un aluminosilicate, tel que le BAS, ledit BAS étant constitué par du BAS de structure hexagonale, et ledit matériau étant homogène, dense, et non fissuré.

En effet, comme le montrent les exemples qui suivent en utilisant classiquement de l'alumine et un frittage en four tubulaire, on obtient un matériau très hétérogène constitué pour moitié seulement de BAS. Si de l'alumine est utilisée avec un frittage par SPS cela mène à la fusion du matériau, et enfin si de l'hydroxyde d'aluminium est utilisé avec un frittage classique cela mène également à un échantillon très hétérogène.

Avantageusement (dans le cas où l'aluminosilicate préparé est l'aluminosilicate de baryum BAS), le rapport molaire de la poudre de carbonate de baryum BaCO₃, de la poudre de silice SiO₂, et de la poudre d'hydroxyde d'aluminium Al(OH)₃ dans le mélange de poudres de précurseurs est de 1 mole de BaCO₃ pour 2 moles de silice SiO₂, et 2 moles d'hydroxyde d'aluminium Al(OH)₃.

Avantageusement, le mélange de poudres de précurseurs, par exemple le mélange de la poudre de carbonate de baryum BaCO₃, de la poudre de silice SiO₂, et de la poudre d'hydroxyde d'aluminium Al(OH)₃ est préparé en mettant en suspension les poudres dans un solvant, en homogénéisant la suspension, et en séchant la suspension.

Le solvant peut être choisi parmi les alcools, de préférence parmi les alcools aliphatiques de 1 à 10C tels que l'éthanol ; l'eau ; et leurs mélanges.

De préférence, le solvant est de l'eau à un pH basique, de préférence à un pH de 10 à 12, par exemple 11.

Il a été constaté (voir exemple 5) que l'utilisation d'un milieu basique lors de la préparation du mélange des poudres permet d'obtenir une microstructure plus homogène du matériau final.

L'eau à pH basique contient généralement une base, qui est de préférence l'ammoniaque.

Ou bien, le solvant peut être de l'eau à un pH acide, par exemple un pH de 4.

Avantageusement, lors du frittage, on peut observer un premier palier à une première température pour éliminer l'eau contenue dans l'hydroxyde d'aluminium Al(OH)₃, un deuxième palier éventuel à une deuxième température pour former des composés intermédiaires (parmi lesquels par exemple BaSi₂O₅), et un troisième palier à une troisième température pour former l'aluminosilicate tel que le BAS.

De préférence :
- Le premier palier est réalisé à une température de 900°C à 1000°C, par exemple de 900°C, pendant une durée de 1 à 5 minutes, par exemple de 1 minute ;
- Le deuxième palier est réalisé à une température de 1100°C à 1200°C, par exemple de 1100°C, pendant une durée de 0 à 20 minutes, de préférence de 1 à 20 minutes, par exemple de 10 minutes ;
- Le troisième palier est réalisé à une température de 1200°C à 1700°C, par exemple de 1200°C, pendant une durée de 1 à 20 minutes, par exemple de 10 minutes.

Avantageusement, le matériau à base d'un aluminosilicate, tel que l'aluminosilicate de baryum BAS, préparé est dense (c'est-à-dire qu'il présente généralement une densité supérieure à 95% de la densité théorique), homogène, et non fissuré.

Le procédé selon l'invention peut comprendre, en outre, une étape au cours de laquelle le matériau à base d'un aluminosilicate, constitué d'aluminosilicate de structure hexagonale, est traité thermiquement pour transformer l'aluminosilicate de structure hexagonale en aluminosilicate de structure orthorhombique, ou en aluminosilicate de structure monoclinique.

Autrement dit, la phase de l'aluminosilicate, tel que le BAS du matériau obtenu selon l'invention est hexagonale et il est facile pour l'homme du métier, s'il le souhaite, d'effectuer un traitement thermique classique pour transformer la phase hexagonale en phase monoclinique.

L'invention a également trait à un procédé de préparation d'un matériau composite, constitué par une matrice en au moins un aluminosilicate, renforcée par des renforts en au moins un oxyde de métal ou de métalloïde dont le coefficient de dilatation est voisin de celui du au moins un aluminosilicate, dans lequel on réalise les étapes successives suivantes :
a) on prépare un matériau à base d'un aluminosilicate par le procédé selon l'invention tel que décrit plus haut, et on prépare une poudre dudit matériau à base d'un aluminosilicate;
b) on met en contact la poudre du matériau à base d'un aluminosilicate, avec des renforts en au moins un oxyde de métal ou de métalloïde dont le coefficient de dilatation est voisin de celui de l'aluminosilicate;
c) on réalise un frittage de la poudre du matériau à base d'un aluminosilicate et des renforts en au moins un oxyde de métal ou de métalloïde par un procédé de frittage à chaud avec un champ électrique pulsé ;
d) on refroidit la poudre et les renforts frittés ;
e) on récupère le matériau composite.

Par oxyde de métal ou de métalloïde dont le coefficient de dilatation est voisin de celui du au moins un aluminosilicate, on entend généralement que le coefficient de dilatation de l'oxyde de métal ou de métalloïde diffère du coefficient de dilatation de l'aluminosilicate de pas plus de 10%, de préférence de pas plus de 5%, de préférence encore de pas plus de 1%.

L'aluminosilicate est choisi parmi l'aluminosilicate de baryum BAS, l'aluminosilicate de baryum et de strontium BSAS, et l'aluminosilicate de strontium SAS.

De préférence, l'aluminosilicate est l'aluminosilicate de baryum BAS.

L'aluminosilicate, tel que le BAS, peut être constitué par de l'aluminosilicate tel que du BAS, de structure hexagonale, auquel cas les renforts sont généralement en alumine.

Ou bien, l'aluminosilicate, tel que le BAS, est constitué par de l'aluminosilicate tel que du BAS, de structure monoclinique, auquel cas les renforts sont généralement en SiC ou en Si₃N₄.

Avantageusement, les renforts en au moins un oxyde de métal ou de métalloïde peuvent se présenter sous une ou plusieurs forme(s) choisie(s) parmi les particules telles que les fibres longues et les fibres courtes aussi appelées trichites ou whiskers; et les tissus de fibres.

Lors de l'étape b), on peut préparer un mélange de la poudre d'un aluminosilicate, telle que de la poudre d'aluminosilicate de baryum, et de particules en au moins un oxyde de métal ou de métalloïde ; ou bien, lors de l'étape b), on imprègne un tissu de fibres en au moins un oxyde de métal ou de métalloïde par une barbotine de la poudre d'au moins un aluminosilicate, telle que de la poudre d'aluminosilicate de baryum.

Le procédé de préparation d'un matériau composite selon l'invention se différencie des procédés de préparation d'un tel matériau composite de l'art antérieur, par le fait qu'il comprend une étape a) au cours de laquelle on prépare un matériau à base d'un aluminosilicate par le procédé selon l'invention tel que décrit plus haut. De ce fait, le procédé de préparation d'un matériau composite selon l'invention possède, de manière inhérente, tous les avantages liés à la mise en oeuvre de cette étape a) par le procédé de préparation d'un matériau à base d'un aluminosilicate selon l'invention.

### BRÈVE DESCRIPTION DES DESSINS.

D'autres caractéristiques et avantages de l'invention ressortiront mieux à la lecture de la description qui va suivre, donnée à titre illustratif et non limitatif en référence aux Figures annexées, dans lesquelles :
- La Figure 1 est une vue schématique en coupe verticale d'un exemple d'appareil de SPS pour la mise en oeuvre du procédé selon l'invention.
- La Figure 2 est un graphique qui montre un cycle thermique utilisé lors de l'étape de frittage par SPS du procédé selon l'invention.

En abscisse est porté le temps (en minutes) et en ordonnée est portée la température (en °C).
- Les Figures 3A et 3B sont des micrographies, réalisées au microscope électronique à balayage d'une coupe d'une pastille de BAS (échantillon 1, Exemple 1) obtenue par un procédé selon l'art antérieur dans lequel on réalise un frittage en deux étapes dans un four tubulaire à partir de poudres de BaCO₃, SiO₂, et Al₂O₃.

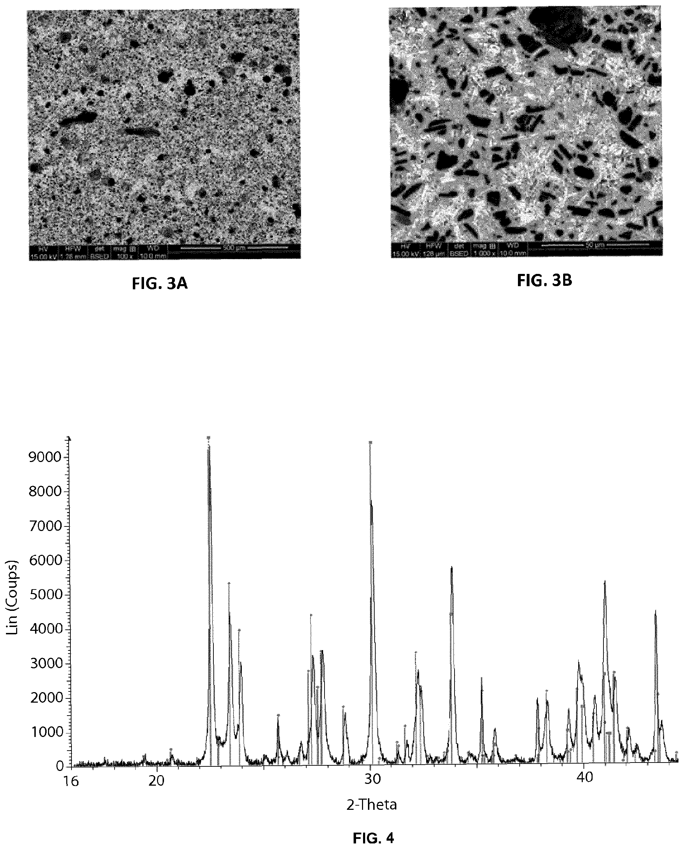

L'échelle portée sur la Figure 3A représente 500 µm.

L'échelle portée sur la Figure 3B représente 50 µm.
- La Figure 4 est un diffractogramme obtenu lors de l'analyse par DRX (Diffraction des Rayons X sur poudre) d'une pastille de BAS (échantillon 1, Exemple 1) obtenue par un procédé selon l'art antérieur dans lequel on réalise un frittage en deux étapes dans un four tubulaire à partir de poudres de BaCO₃, SiO₂, et Al₂O₃.

En abscisse est portée 2 Thêta (en °), et en ordonnée est porté Lin (en coups).

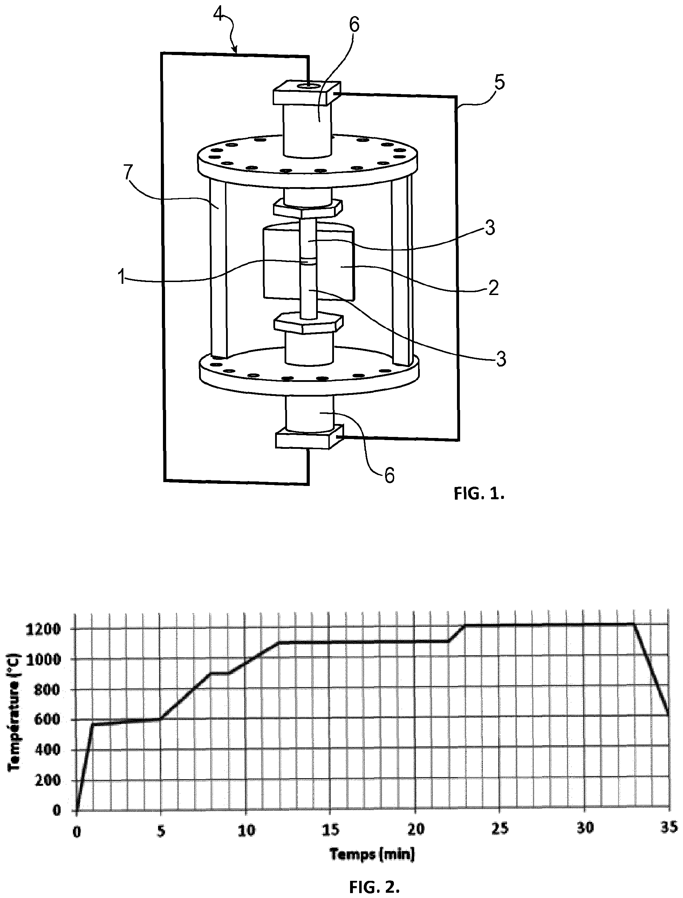

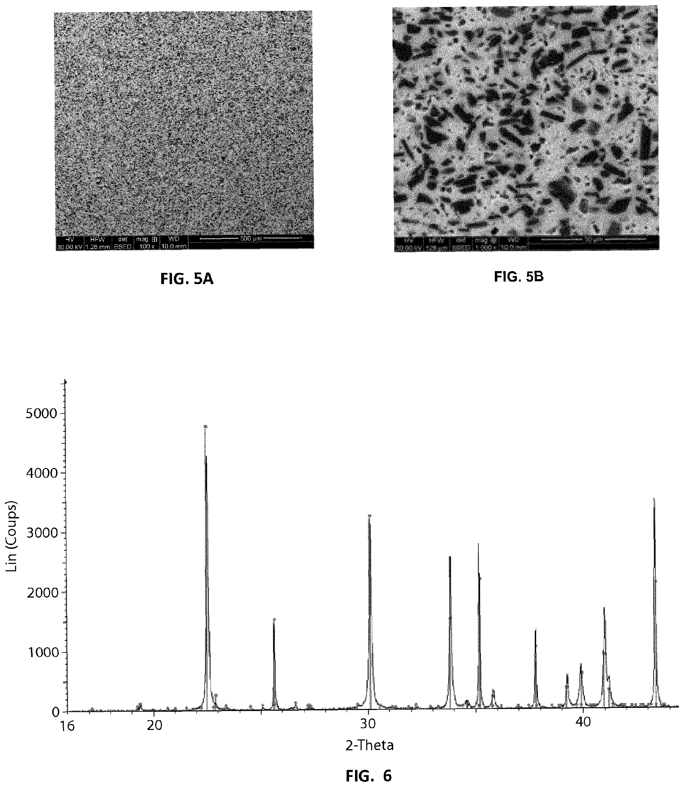

- Les Figures 5A et 5B sont des micrographies, réalisées au microscope électronique à balayage d'une coupe d'une pastille de BAS (échantillon 2, Exemple 2) obtenue par un procédé selon l'art antérieur dans lequel on réalise un frittage en une seule étape, par SPS selon le cycle présenté sur la Figure 1, d'un mélange de poudres de BaCO₃, SiO₂, et Al₂O₃.

L'échelle portée sur la Figure 5A représente 500 µm.

L'échelle portée sur la Figure 5B représente 50 µm.
- La Figure 6 est un diffractogramme obtenu lors de l'analyse par DRX (Diffraction des Rayons X sur poudre) d'une pastille de BAS (échantillon 2, Exemple 2) obtenue par un procédé selon l'art antérieur dans lequel on réalise un frittage en une seule étape, par SPS selon le cycle présenté sur la Figure 1, d'un mélange de poudres de BaCO₃, SiO₂, et Al₂O₃.

En abscisse est portée 2 Thêta (en °), et en ordonnée est porté Lin (en coups).

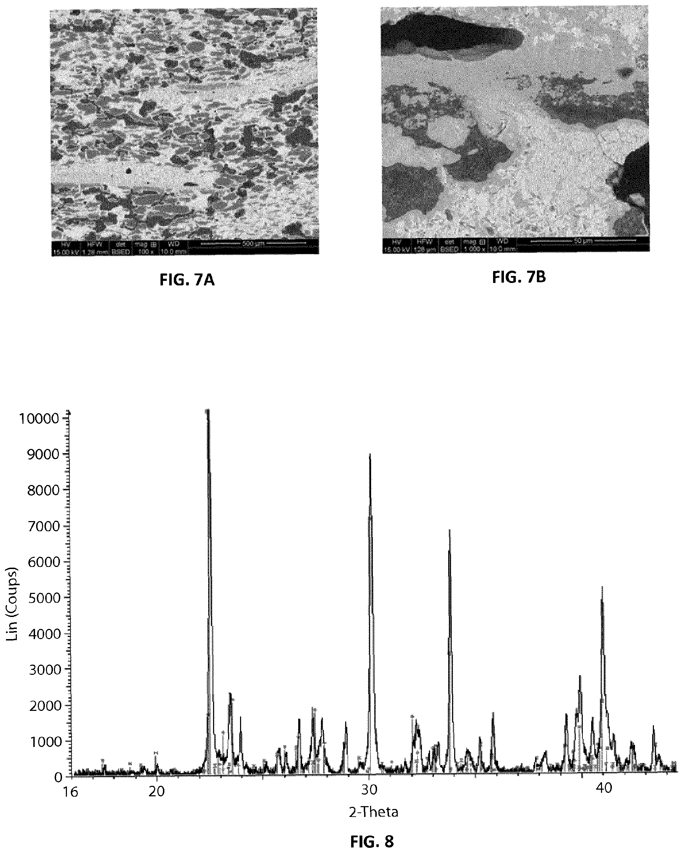

- Les Figures 7A et 7B sont des micrographies, réalisées au microscope électronique à balayage d'une coupe d'une pastille de BAS (échantillon 3, Exemple 3) obtenue par un procédé non conforme à l'invention dans lequel on réalise un frittage en deux étapes dans un four tubulaire à partir de poudres de BaCO₃, SiO₂, et Al(OH)₃ dispersées dans de l'éthanol.

L'échelle portée sur la Figure 7A représente 500 µm.

L'échelle portée sur la Figure 7B représente 50 µm.
- La Figure 8 est un diffractogramme obtenu lors de l'analyse par DRX (Diffraction des Rayons X sur poudre) d'une pastille de BAS (échantillon 3, Exemple 3) obtenue par un procédé selon l'art antérieur dans lequel on réalise un frittage en deux étapes dans un four tubulaire à partir de poudres de BaCO₃, SiO₂, et Al(OH)₃ dispersées dans de l'éthanol.

En abscisse est portée 2 Thêta (en °), et en ordonnée est porté Lin (en coups).

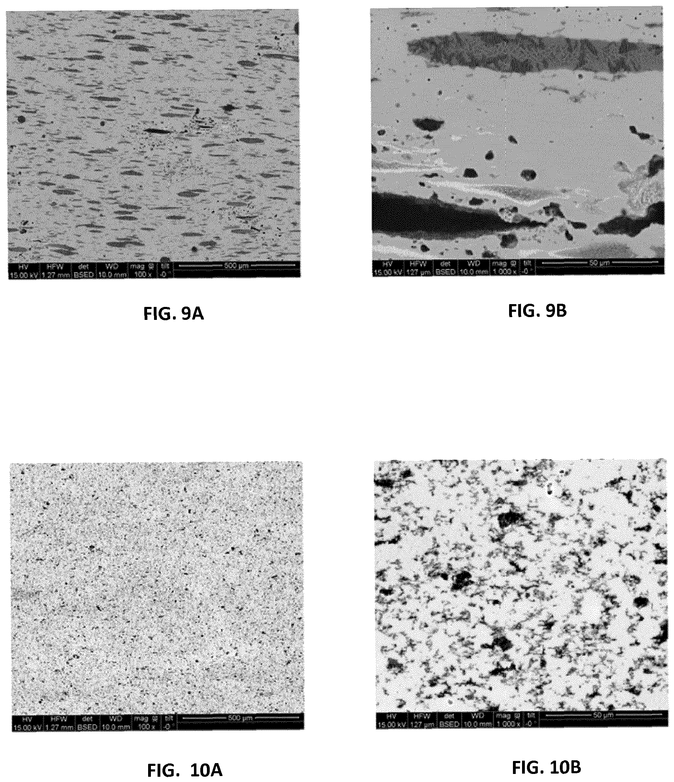

- Les Figures 9A et 9B sont des micrographies, réalisées au microscope électronique à balayage d'une coupe d'une pastille de BAS (échantillon 4, Exemple 4) obtenue par un procédé selon l'invention dans lequel on réalise un frittage en une seule étape, par SPS selon le cycle présenté sur la Figure 1, d'un mélange de poudres de BaCO₃, SiO₂, et Al(OH)₃ dispersé dans de l'éthanol.

L'échelle portée sur la Figure 9A représente 500 µm.

L'échelle portée sur la Figure 9B représente 50 µm.

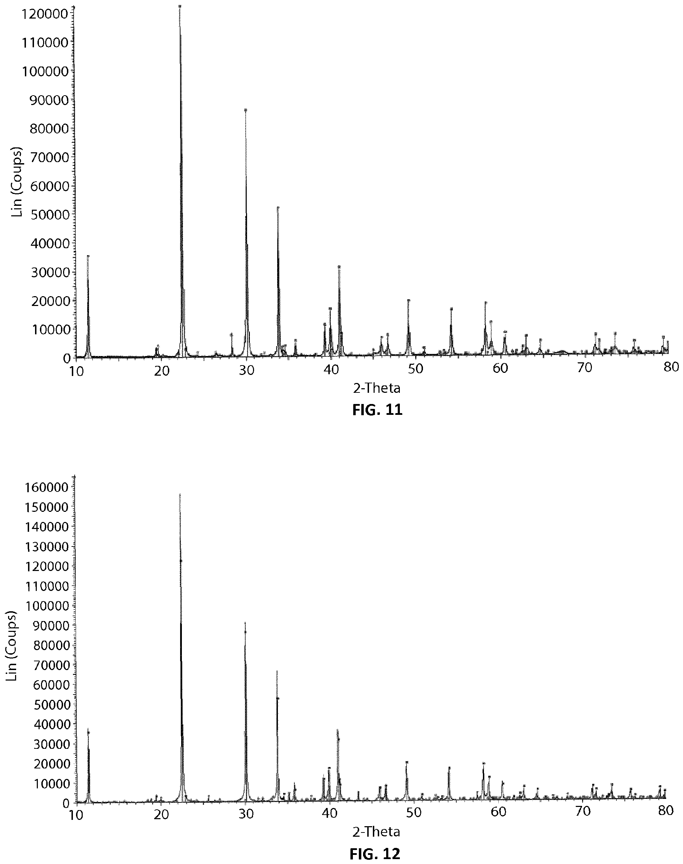

- La Figure 11 est un diffractogramme obtenu lors de l'analyse par DRX (Diffraction des Rayons X sur poudre) d'une pastille de BAS (échantillon 4, Exemple 4) obtenue par un procédé selon l'invention dans lequel on réalise un frittage en une seule étape, par SPS selon le cycle présenté sur la Figure 1, d'un mélange de poudres de BaCO₃, SiO₂, et Al(OH)₃ dispersé dans de l'éthanol.

En abscisse est portée 2 Thêta (en °), et en ordonnée est porté Lin (en coups).
- Les Figures 10A et 10B sont des micrographies, réalisées au microscope électronique à balayage d'une coupe d'une pastille de BAS (échantillon 5, Exemple 5) obtenue par un procédé selon invention dans lequel on réalise un frittage en une seule étape, par SPS selon le cycle présenté sur la Figure 1, d'un mélange de poudres de BaCO₃, SiO₂, et Al(OH)₃ dispersé dans un milieu basique, à savoir de l'eau à pH 11.

L'échelle portée sur la Figure 10A représente 500 µm.

L'échelle portée sur la Figure 10B représente 50 µm.
- La Figure 12 est un diffractogramme obtenu lors de l'analyse par DRX (Diffraction des Rayons X sur poudre) d'une pastille de BAS (échantillon 5, Exemple 5) obtenue par un procédé selon l'invention dans lequel on réalise un frittage en une seule étape, par SPS selon le cycle présenté sur la Figure 1, d'un mélange de poudres de BaCO₃, SiO₂, et Al(OH)₃ dispersé dans un milieu basique, à savoir de l'eau à pH 11.

En abscisse est portée 2 Thêta (en °), et en ordonnée est porté Lin (en coups).

### EXPOSÉ DÉTAILLÉ DE MODES DE RÉALISATION PARTICULIERS

La description qui suit du procédé selon l'invention de préparation d'un aluminosilicate est plutôt faite en référence à la préparation de l'aluminosilicate de baryum. Mais il est bien évident que cette description pourra être facilement adaptée par l'homme du métier, à la préparation d'autres aluminosilicates, quels qu'ils soient comme par exemple l'aluminosilicate de baryum et de strontium BSAS, ou l'aluminosilicate de strontium SAS.

Le produit de départ pour la préparation du BAS est un mélange d'une poudre de carbonate de baryum BaCO₃, d'une poudre de silice SiO₂, et d'une poudre d'hydroxyde d'aluminium Al(OH)₃.

Là-encore, il est bien évident que le choix des poudres qui constituent le mélange sera facilement adapté à la préparation d'autres aluminosilicates que le BAS, à la condition toutefois que le mélange de poudre contienne de d'hydroxyde d'aluminium Al(OH)₃.

La silice est de préférence de la silice cristallisée, sous forme de quartz. Les poudres de silice utilisées sont généralement des poudres commerciales de haute pureté, à savoir généralement supérieure ou égale à 99%.

La granulométrie moyenne des poudres de silice et de carbonate de baryum est généralement de 0,5 à 10 µm, de préférence de 2 à 5 µm.

La granulométrie de la poudre d'hydroxyde d'aluminium Al(OH)₃ est généralement de 0,5 à 10 µm, de préférence de 2 à 5 µm.

Dans ce mélange de poudres pour préparer du BAS, le rapport molaire de la poudre de carbonate de baryum BaCO₃, de la poudre de silice SiO₂, et de la poudre d'hydroxyde d'aluminium Al(OH)₃ est de préférence de 1 mole de BaCO₃, 2 moles de silice SiO₂, et 2 moles d'hydroxyde d'aluminium Al(OH)₃.

De préférence, le mélange de la poudre de carbonate de baryum BaCO₃, de la poudre de silice SiO₂, et de la poudre d'hydroxyde d'aluminium Al(OH)₃ est préparé en mettant en suspension les poudres dans un solvant, en homogénéisant la suspension, et en séchant la suspension.

La préparation du mélange de poudres commence par une pesée des différentes poudres dans un même récipient.

Un solvant est ensuite ajouté aux poudres contenues dans ce même récipient pour obtenir une suspension ou dispersion desdites poudres. Cette suspension ou dispersion a de préférence une concentration de 50 à 100 g/L.

Le solvant peut être choisi parmi les alcools, de préférence parmi les alcools aliphatiques de 1 à 10C tels que l'éthanol ; l'eau ; et leurs mélanges.

Un solvant préféré est l'eau à un pH basique, de préférence à un pH de 10 à 12, par exemple 11.

Afin d'obtenir un tel pH, l'eau contient une base qui est par exemple l'ammoniaque.

La suspension, dispersion de poudres est ensuite homogénéisée.

Cette homogénéisation peut être réalisée par toute technique adéquate connue de l'homme du métier.

Par exemple, cette homogénéisation peut être effectuée sous l'action des ultrasons, à l'aide d'un sonificateur.

Ainsi, l'homogénéisation de la dispersion, solution peut-elle être réalisée à l'aide d'un sonificateur Vibrocell® 75401, opérant par exemple pendant 4 minutes à 30% de puissance avec 2 secondes d'activité et 2 secondes d'arrêt.

La suspension, dispersion, est ensuite séchée.

Ce séchage peut être réalisé par toute technique adéquate connue de l'homme du métier. Par exemple le séchage de la suspension, dispersion peut être effectué sur une plaque chauffante.

Le séchage est généralement réalisé à une température de 100°C à 140°C, par exemple de 120°C, pendant une durée de 0,5 à 3 heures, par exemple une durée d'une heure.

A l'issue du séchage, on obtient un mélange homogène des poudres de précurseurs qui ne contient plus de solvant.

Conformément à l'invention, on réalise ensuite en une seule étape, le frittage du mélange de poudres de précurseurs, par exemple du mélange d'une poudre de carbonate de baryum BaCO₃, d'une poudre de silice SiO₂, et d'une poudre d'hydroxyde d'aluminium Al(OH)₃ par une technique de frittage à chaud avec un champ électrique pulsé SPS.

La technologie du frittage à chaud avec champ électrique pulsé (« *Spark Plasma Sintering* » ou « *SPS* » en anglais) est aussi connue sous la dénomination anglaise de « *Field Activated Sintering Technique* » ou FAST ou encore sous la dénomination de « frittage flash ». Ce procédé permet notamment la densification rapide de poudres.

Le « SPS » est une technique de frittage qui consiste à appliquer simultanément sur l'échantillon pulvérulent à densifier une pression uniaxiale et des impulsions (« pulses ») de courant de forte intensité qui provoquent une montée en température de l'échantillon. Le courant est appliqué sous la forme de trains d'impulsions de courant, par exemple d'une période de 3,2 ms, dont l'intensité peut atteindre plusieurs milliers d'ampères, par exemple jusqu'à 8000 A, voire 50000 A.

Le courant est appliqué à l'échantillon par l'intermédiaire d'un montage de plateaux et de pistons en graphite, le mélange de poudres est inséré à l'intérieur d'une matrice, chemise, pastilleuse, ou moule en graphite.

Le montage constitué par la chemise, pastilleuse, ou moule, les pistons et les plateaux, est le seul, dans l'enceinte sous vide, à monter en température.

Plus exactement, on a représenté sur la Figure 1 le principe de fonctionnement d'un appareil de SPS convenant pour la mise en oeuvre du procédé selon l'invention, et ses principaux organes. Le mélange des poudres (1), est placé dans un moule, une chemise, matrice, pastilleuse en graphite (2), entre deux pistons aussi en graphite (3). Une pression (4) est appliquée à ces pistons (3), et un courant continu (5) est appliqué à des électrodes (6). Le mélange des poudres (1), les pistons (3), la chemise en graphite (2) et une portion des électrodes (6) sont placés à l'intérieur d'une enceinte sous vide (7).

La température est suivie par l'intermédiaire d'un pyromètre optique qui pilote également la puissance électrique injectée dans le montage.

Le principal intérêt de la technologie « SPS » est d'élever la température avec un minimum d'énergie calorifique et de faire réagir et densifier, le mélange de poudres en des temps relativement courts de l'ordre de quelques minutes, par exemple de 5 à 10 minutes.

La rapidité de frittage permet de limiter les phénomènes de diffusion et de croissance granulaire ce qui a pour effet de conserver des tailles de grain submicroniques. Il est possible d'atteindre une densité proche de 100%. On commence généralement par placer le mélange de poudres à l'intérieur du moule, de la pastilleuse, chemise, matrice en graphite de la machine, dispositif de « SPS », décrit plus haut.

Généralement, on place une feuille de graphite souple tel que le produit commercialisé sous la dénomination commerciale de PAPYEX® par la société Carbone Lorraine entre le mélange de poudres et les parois internes du moule et entre le mélange de poudres et les pistons. Cette feuille a pour but d'empêcher les poudres de réagir avec le moule et les pistons et de les préserver.

Le PAPYEX® peut être revêtu sur une de ses faces, à savoir la face en contact avec le mélange de poudres, d'une couche de nitrure de bore BN.

Le BN joue le rôle de barrière de diffusion entre les précurseurs et le graphite.

Le moule en graphite peut être également recouvert d'un feutre en graphite pour limiter le rayonnement.

La pastilleuse, matrice, chemise, moule en graphite et les pistons sont ensuite placés dans la machine de SPS telle que la machine décrite sur la Figure 1.

L'enceinte sous vide est fermée puis on amorce la mise sous vide. Lorsque le vide souhaité, c'est-à-dire lorsque la pression est généralement inférieure à 10 Pa, l'opération de frittage par SPS proprement dite peut alors commencer.

On applique une pression suffisante audit mélange de poudres et simultanément, on applique un courant électrique pulsé suffisant audit mélange pour élever la température de la pièce jusqu'à une température suffisante pour provoquer une réaction et un frittage du mélange de poudres de précurseurs.

En d'autres termes, lorsque tout est en contact (pastilleuse, pistons, mélange), on peut générer un courant électrique afin de créer l'élévation de température. De manière générale, l'ampérage maximal que peut supporter une matrice est lié notamment à son diamètre. Ainsi, pour un diamètre d'échantillon de 8 mm, on peut appliquer 2000 A sans risquer de détériorer la matrice. Pour des diamètres plus importants tels que 20 mm, on peut appliquer 4000 A ou plus.

Le courant électrique pulsé appliqué est généralement de 1A à 50000A afin de créer une élévation de température jusqu'à une température (température de palier) comprise entre 1000°C et 2500°C. La pression qui est appliquée en même temps correspond à une force appliquée de 0,01 MPa à 500 MPa.

De préférence, la pression appliquée est selon l'invention généralement de 1 à 200 MPa et l'intensité appliquée est de préférence de 500 à 8000 A. De préférence, la pression est de 10 à 150 MPa, de préférence encore de 20 à 100 MPa, par exemple de 40 MPa.

De préférence, l'intensité est de 200 à 6000 A, de préférence encore de 300 à 1000 A.

Les valeurs de pression et d'intensité sont choisies à l'intérieur des plages ci-dessus de façon à ce que la température du mélange de poudres de précurseurs s'élève à une température (température de palier) permettant la réaction, le frittage du mélange de poudres de précurseurs, et sa densification, de préférence sa densification totale. Une telle température est généralement de 700°C à 2000°C, de préférence de 1000°C à 1500°C, de préférence encore de 1100°C à 1300°C, par exemple de 1200°C.

La durée pendant laquelle est maintenue ladite température (encore appelée température de palier) par exemple de 1200°C, durée que l'on peut nommer aussi durée ou temps de palier est une durée courte généralement de 0 à 10 minutes, de préférence de 0 à 7 minutes, par exemple de 5 minutes.

Lorsque le temps de palier est égal à 0, cela signifie que l'on effectue une montée en température jusqu'à la température maximale et que l'on redescend à la température ambiante sans qu'un palier soit observé.

On notera que cette durée de palier est dans tous les cas très faible, au regard des autres méthodes de frittage.

Une telle durée de frittage très courte est particulièrement avantageuse dans le cas où BAS est du BAS hexagonal, car il permet de « figer » la phase haute température, hexagonale, métastable du BAS.

De même, le temps de cycle hors refroidissement, et la durée globale, totale du cycle complet avec le refroidissement, sont réduits.

Ce temps de cycle est par exemple de 10 à 30 minutes, notamment de 20 à 22 minutes seulement, et la durée du cycle complet est d'environ une heure, ce qui constitue un autre avantage du procédé selon l'invention.

Il est généralement important de maîtriser la descente en température et en pression afin d'éviter la fissuration du matériau.

Le refroidissement du matériau est généralement effectué de manière pas trop brutale comme peut le comprendre l'homme du métier dans ce domaine de la technique. Ainsi, on observera généralement une vitesse de refroidissement de 1°C à 600°C par minute, par exemple de 10°C à 100°C/min depuis le palier de température.

De préférence, le refroidissement est effectué par rampes successives présentant des pentes différentes, ainsi le refroidissement peut s'effectuer par exemple comme suit : 45°C/min de la température de palier à 600°C ; puis refroidissement selon l'inertie de la machine de 600°C à l'ambiante.

Il est évident pour l'homme du métier, que le cycle température-pression est à optimiser pour chaque type de mélange de poudres de précurseurs, mis en oeuvre. En revanche, quelles que soient les montées, les descentes ou les durées des paliers en température et en pression, la simultanéité de la température et de la pression est indispensable au bon frittage du mélange de poudres de précurseurs.

Avantageusement, les paramètres de température et donc d'intensité, et de pression (ou de force appliquée, la pression dépendant de la surface d'appui suivant la relation bien connue P = F/S) ne sont pas, depuis la température ambiante et une pression de 0 MPa, appliqués de manière brutale, instantanée, mais sont élevés de manière progressive depuis la température ambiante et une pression de 0 MPa.

Pour la température (régie par l'intensité), on réalisera ainsi de préférence une montée progressive avec une rampe, ou plusieurs rampes présentant éventuellement des pentes différentes, ces rampes étant éventuellement séparées par des paliers intermédiaires, pour arriver jusqu'à la température maximale mentionnée plus haut, encore appelée température de palier ou de frittage.

La ou lesdites rampes de température ont préférentiellement une pente de 50°C à 200°C/min, par exemple de 80°C/min. ou de 100°C/min.

Globalement, pour atteindre la température maximale, par exemple de 1200°C, on ajuste de préférence la montée en température des rampes pour être le plus proche possible d'une rampe à 80°C/minute.

Selon l'invention, lors du frittage, on peut observer un premier palier à une première température pour éliminer l'eau contenue dans l'hydroxyde d'aluminium Al(OH)₃, un deuxième palier éventuel à une deuxième température pour former des composés intermédiaires, et un troisième palier à une troisième température pour former l'aluminosilicate, tel que le BAS.
- Le premier palier peut être réalisé à une température de 900°C à 1000°C, par exemple de 900°C, pendant une durée de 1 à 5 minutes, par exemple de 1 minute ;
- Le deuxième palier peut être réalisé à une température de 1100°C à 1200°C, par exemple de 1100°C, pendant une durée de 0 à 20 minutes, de préférence de 1 à 20 minutes, par exemple de 10 minutes ;
- Le troisième palier peut être réalisé à une température de 1200°C à 1700°C, par exemple de 1200°C, pendant une durée de 1 à 20 minutes, par exemple de 10 minutes.

Pour la pression, on pourra, de la même manière, avantageusement réaliser une montée progressive avec une rampe, ou plusieurs rampes présentant éventuellement des pentes différentes, ces rampes étant éventuellement séparées par des paliers intermédiaires, pour arriver jusqu'à la pression maximale indiquée plus haut, encore appelée pression de palier ou de frittage.

La ou lesdites rampes de pression ont généralement une pente de 1 MPa/min à 20 MPa/min, de préférence de 5 à 10 MPa/min.

La montée en température et la montée en pression qu'elles soient progressives ou non, se font de préférence de manière simultanée, concomitante, en une même durée.

Si plusieurs rampes de pression et plusieurs rampes de température sont réalisées, les rampes de pression et de température correspondantes ont de préférence la même durée.

En appliquant les paramètres de température (et donc d'intensité) et/ou de pression (et donc de force appliquée) de manière progressive et non de manière brutale, soudaine, instantanée, on évite ainsi de soumettre le matériau à des contraintes trop fortes et aucune cassure du matériau n'est à déplorer.

A titre d'exemple, une montée en température, depuis la température ambiante (généralement 20°C à 25°C), jusqu'à 1200°C, pourra s'effectuer de la manière suivante (voir la Figure 2) :
- température ambiante à 570°C : 1 minute environ ;
- 570°C à 600°C : 4 minutes environ ;
- 600°C à 900°C : 3 minutes environ ;
- palier à 900°C : 1 minutes environ ;
- 900°C à 1100°C : 3 minutes environ ;
- Palier à 1100°C : 10 minutes environ ;
- 1100°C à 1200°C : 1 minute environ ;
- Palier à 1200°C : 10 minutes environ ;
- Refroidissement de 1200°C à la température ambiante : durée conditionnée par l'inertie thermique de la machine, par exemple de 10 minutes à 30 minutes, notamment 20 minutes.

Pendant le même temps, la pression évolue de la manière suivante :
- 40 MPa du temps 0 (moment où le chauffage commence depuis la température ambiante, c'est-à-dire début de la première rampe de température) au temps final (fin du chauffage, fin du palier à 1200°C).

Le courant est appliqué sous forme de séries, trains d'impulsions (« pulses ») ; chaque série, train, est constitué d'un nombre déterminé et réglable de « pulses ». Les séries (trains) sont séparées entre elles par un temps pendant lequel le courant appliqué est nul.

Dans le procédé selon l'invention, on utilise généralement des impulsions de 1 à 5 ms, par exemple de 3,3 ms de période, assemblées généralement par train de 1 à 15, par exemple 12 impulsions, chaque train étant généralement séparé par 1 à 15 périodes, par exemple 2 périodes, de la durée (telle que 3,3 ms) ci-dessus, sans courant.

Il est possible de changer ces valeurs mais le courant doit toujours garder la même géométrie, à savoir : des trains d'impulsions plus ou moins nombreux séparés par des périodes variables sans courant.

La tension appliquée est de quelques volts, généralement de 1 à 8 volts, de préférence de 2 à 7 volts, typiquement 3 volts pour 500 A.

A l'issue du refroidissement, généralement jusqu'à la température ambiante, par exemple de 20°C à 25°C, on récupère le matériau préparé par le procédé selon l'invention dans l'appareil de « SPS ».

Le matériau selon l'invention est un matériau à base d'un aluminosilicate, ledit aluminosilicate étant constitué (100% en masse) d'aluminosilicate de structure hexagonale.

Comme on l'a déjà indiqué plus haut, par matériau à base d'aluminosilicate, on entend généralement un matériau comprenant 80% en masse ou plus, de préférence encore 100% en masse d'aluminosilicate, tel que l'aluminosilicate de baryum.

Le reste de la poudre du matériau selon l'invention peut comprendre, une ou plusieurs impuretés choisies par exemple parmi l'alumine, la silice, et des silicates de baryum tels que le Ba₅Si₈O₂₁ et le Ba₃Si₅O₁₃.

Avantageusement, le matériau à base d'un aluminosilicate tel que l'aluminosilicate de baryum BAS préparé est dense, homogène, et non fissuré.

Le procédé selon l'invention peut comprendre, en outre, une étape au cours de laquelle le matériau à base d'un aluminosilicate, constitué d'aluminosilicate de structure hexagonale, est traité thermiquement pour donner un aluminosilicate, constitué d'aluminosilicate de structure monoclinique.

Autrement dit, la phase de l'aluminosilicate, tel que le BAS du matériau obtenu selon l'invention est hexagonale et il est facile pour l'homme du métier, s'il le souhaite, d'effectuer un traitement thermique classique pour transformer la phase hexagonale en phase orthorhombique ou en phase monoclinique.

Ainsi, un traitement thermique par exemple d'une durée de 1 heure à 10 heures, à basse température, par exemple vers 300°C, permet de transformer le BAS hexagonal en BAS orthorhombique.

Ou bien un traitement thermique prolongé par exemple d'une durée de 150 heures, à plus haute température, par exemple vers 1200°C, permet de transformer le BAS hexagonal en BAS monoclinique.

Le matériau préparé par le procédé selon l'invention peut se présenter sous différentes formes, par exemple sous la forme d'un monolithe ou d'une poudre, ou bien il peut servir à préparer un matériau composite en constituant la matrice de ce matériau composite, comme dans les documents [4] et [4A].

A la sortie du SPS le matériau obtenu est un bloc fritté.

Et l'invention a donc également trait à un procédé de préparation d'un matériau composite, constitué par une matrice en au moins un aluminosilicate, renforcée par des renforts en au moins un oxyde de métal ou de métalloïde dont le coefficient de dilatation est voisin de celui du au moins un aluminosilicate.

Dans ce procédé, on prépare (étape a)) un matériau à base d'un aluminosilicate par le procédé selon l'invention tel que décrit plus haut, puis on prépare si nécessaire une poudre dudit matériau à base d'un aluminosilicate, généralement par broyage.

Ensuite, les étapes b) à e) du procédé de préparation d'un matériau composite selon l'invention, sont les étapes a) à d) du procédé tel que décrit dans les documents [4A] et [4B].

Autrement dit, on utilise dans le procédé décrit dans les documents [4A] et [4B] une poudre du matériau à base d'un aluminosilicate préparé par le procédé selon l'invention exposé plus haut.

Précisons que la poudre d'aluminosilicate, par exemple d'aluminosilicate de baryum BAS, peut être constituée par des particules de forme quelconque par exemple de forme sphérique ou sphéroïdale.

La taille -définie par leur plus grande dimension- moyenne des particules de la poudre d'aluminosilicate de baryum est généralement de 10 nm à 100 microns, de préférence de 1 micron à 10 microns.

Comme on le précise plus loin, lorsque la poudre d'aluminate, par exemple de BAS est de structure hexagonale, alors les renforts sont de préférence en alumine.

Ou bien, si la poudre d'aluminosilicate est de structure monoclinique alors les renforts sont de préférence en silice et/ou en mullite.

Le matériau composite préparé par le procédé selon l'invention, du fait de ses excellentes propriétés mécaniques et de résistance à des températures élevées trouve son application dans des domaines aussi divers que l'aéronautique, l'aérospatiale par exemple pour la fabrication de radomes, l'industrie chimique et d'une manière générale dans tous les domaines où d'excellentes propriétés mécaniques à de hautes températures sont requises.

L'invention va maintenant être décrite en référence aux exemples suivants, donnés à titre illustratif et non limitatif.

### EXEMPLES.

Dans les exemples qui suivent, on prépare cinq échantillons d'Aluminosilicate de Baryum BAS.

Dans l'exemple 1, on prépare un échantillon de BAS 1 par un procédé selon l'art antérieur dans lequel on réalise un frittage en deux étapes dans un four tubulaire à partir de poudres de BaCO₃, SiO₂, et Al₂O₃.

Dans l'exemple 2, on prépare un échantillon de BAS, échantillon 2, par un procédé non conforme à l'invention dans lequel on réalise un frittage en une seule étape, par SPS selon le cycle présenté sur la Figure 2, d'un mélange de poudres de BaCO₃, SiO₂, et Al₂O₃.

Dans l'exemple 3, on prépare un échantillon de BAS, échantillon 3, par un procédé non conforme à l'invention dans lequel on réalise un frittage en deux étapes dans un four tubulaire à partir de poudres de BaCO₃, SiO₂, et Al(OH)₃ dispersées dans de l'éthanol.

Dans l'exemple 4, on prépare un échantillon de BAS, échantillon 4, par un procédé selon l'invention dans lequel on réalise un frittage en une seule étape, par SPS selon le cycle présenté sur la Figure 2, d'un mélange de poudres de BaCO₃, SiO₂, et Al(OH)₃ dispersé dans de l'éthanol puis séché.

Dans l'exemple 5, on prépare un échantillon de BAS, échantillon 5, par un procédé selon l'invention dans lequel on réalise un frittage en une seule étape, par SPS selon le cycle présenté sur la Figure 2, d'un mélange de poudres de BaCO₃, SiO₂, et Al(OH)₃ dispersé dans un milieu basique, à savoir de l'eau à pH 11, puis séché.

Dans ces cinq exemples, on montre d'une part l'intérêt de remplacer l'alumine par l'hydroxyde d'aluminium dans les compositions de départ afin d'obtenir un mélange plus réactif et d'autre part la nécessité d'utiliser un traitement thermique par SPS plutôt qu'un traitement classique dans un four tubulaire. Les exemples 1-3 sont comparatifs.

### 1. Matières premières utilisées.

Les poudres utilisées pour la synthèse du BAS sont les suivantes :

### a. Alumine (Al₂O₃).

La poudre d'alumine de référence 265497 provient de chez SIGMA-ALDRICH®. Le d₅₀ des particules est de 10 µm et sa pureté est de 99,7%.

### b. Silice (SiO₂).

La poudre de silice provient de chez SIGMA-ALDRICH, sa référence est S5631. C'est du SiO₂ sous forme de quartz avec une pureté voisine de 99%, et une granulométrie comprise entre 0,5 et 10 µm dont 80% entre 1 et 5 µm.

### c. Carbonate de baryum (BaCO₃).

La poudre de carbonate de baryum provient de chez SIGMA-ALDRICH, sa référence est 237108. Sa granulométrie moyenne est de 5 µm, et sa pureté est supérieure à 99%.

### d. Hydroxyde d'aluminium de formule Al(OH)₃ .

La poudre d'hydroxyde d'aluminium provient de chez Alfa Aesar®. Sa pureté est supérieure à 76,5%. Elle présente une granulométrie moyenne de 10 µm après dispersion à la sonotrode.

### 2. Préparation des mélanges :

La préparation des mélanges commence par une pesée des différentes poudres dans un même récipient.

Un solvant est ajouté pour obtenir une suspension. Le solvant est de l'éthanol ou de l'eau avec ajout d'ammoniaque.

La suspension est homogénéisée à l'aide d'un sonificateur Vibrocell® 75401 pendant 4min à 30% de puissance avec 2 secondes d'activité et 2 secondes d'arrêt.

La suspension est ensuite séchée sur une plaque chauffante à 120°C pendant 1h.

### 3. Traitements thermiques :

Deux traitements thermiques ont été mis en oeuvre lors de la préparation des cinq échantillons.

Le premier traitement est un traitement que l'on peut qualifier de traitement « classique » qui est réalisé dans un four tubulaire.

Le deuxième traitement est un traitement selon l'invention par SPS.

### 3.1. Traitements en four tubulaire.

Pour les traitements en four tubulaire, la poudre est pastillée à l'aide d'une matrice de 10 mm de diamètre. Environ 1,5 g de poudre est utilisé par pastille. La pression appliquée est fixée arbitrairement à 200 bar.

Le traitement thermique en four tubulaire (Carbolite® 1500) sous air se décompose en deux étapes. La première étape consiste à mélanger BaCO₃ et SiO₂ pour les faire réagir vers 1150°C et former un silicate de baryum. Le silicate de baryum est ensuite mélangé à l'alumine pour former le BAS à 1200°C.

### 3.2 Traitement par SPS.

Le traitement de SPS peut être réalisé avec un dispositif tel que celui représenté sur la Figure 1, déjà décrit plus haut.

Pour chaque essai, deux disques (de 10 mm de rayon) et un carré (de 31 mm de côté) sont découpés dans une feuille de Papyex® (feuille de graphite) de 0,5 mm d'épaisseur.

Les feuilles de Papyex® servent à protéger le moule et à empêcher l'adhésion du matériau. Le Papyex® est recouvert d'une couche de BN sur les zones qui seront en contact avec la poudre.

La couche de BN est déposée à l'aide d'une bombe aérosol. La couche de BN limite la diffusion du carbone dans le matériau.

La feuille carrée de Papyex® est roulée puis insérée dans la matrice. Un piston est inséré dans la matrice jusqu'à sa mi hauteur. Un disque de Papyex® est déposé contre le piston. La surface recouverte de BN est à l'opposé du piston. La poudre est versée et tassée manuellement. Le second disque de Papyex® est inséré de manière à mettre en contact la poudre avec la face recouverte de BN. Le second piston est introduit pour fermer le système. Une légère pression, généralement inférieure à 3kN, est appliquée sur les pistons pour éviter d'avoir des déplacements trop important pendant le cycle thermique. La position des pistons doit être ajustée pour qu'ils ressortent de manière équivalente de chaque côté de la matrice.

L'ensemble est placé dans une machine de SPS, telle que celle représentée sur la Figure 1. Le cycle de référence pour les essais est celui présenté sur la Figure 2.

La montée en température est ajustée pour être le plus proche possible d'une rampe à 80°C/min.

Trois paliers sont observés.

Le premier palier à 900°C permet l'élimination de l'eau contenue dans Al(OH)₃ lorsque le mélange de poudres en contient. Le second palier à 1100°C pendant 10 minutes permet aux composés intermédiaires de se former. Le troisième et dernier palier à 1200°C pendant 10 minutes achève la réaction pour former le BAS.

Le tableau 2 suivant indique la composition des poudres utilisées pour préparer les échantillons de BAS, ainsi que les traitements thermiques utilisés pour préparer les échantillons de BAS.

**Tableau 2 : Composition des poudres utilisées pour préparer les échantillons de BAS, et traitements thermiques utilisés pour préparer chaque échantillon.**

| | Echantillon 1 | Echantillon 2 | Echantillon 3 | Echantillon 4 | Echantillon 5 |
|---|---|---|---|---|---|
| BaCO₃ | 0,694 g | 0,694 g | 0,487 g | 0,487 g | 0,487 g |
| SiO₂ | 0,423 g | 0,423 g | 0,297 g | 0,297 g | 0,297 g |
| Al₂O₃ | 0,359 g | 0,359 g | 0g | 0g | 0g |
| Al(OH)₃ | 0g | 0g | 0,677 g | 0,677 g | 0,677 g |
| Solvant | Ethanol 25 ml | Ethanol 25 ml | Ethanol 25 ml | Ethanol 25 ml | Eau + NH₄ pH=11 |
| Frittage | Four tubulaire | SPS | Four tubulaire | SPS | SPS |

### 4. Caractérisation.

Les échantillons préparés sont analysés par DRX (Diffraction des Rayons X sur poudre) à l'aide d'un diffractomètre Bruker® D8 Advance, et l'utilisation de la méthode Rietveld permet de faire une analyse quantitative des phases.

Toutes les quantités sont affichées en pourcentage massique.

L'analyse quantitative est réalisée à l'aide du logiciel Fullprof®.

La qualité de la mesure est représentée par le facteur de confiance R_{wp}. Il faut minimiser R_{wp} afin d'obtenir une valeur fiable. Les erreurs sur les mesures présentées ici sont de l'ordre de 1%.

Des observations au microscope électronique à balayage (MEBe FEI 400 FEG) des échantillons en coupe servent à contrôler la morphologie et les éléments présents dans chacune des phases.

Des pesées hydrostatiques permettent de mesurer le taux de porosité dans les échantillons réalisés. Le Logiciel ImageJ® permet de faire de l'analyse d'image et ainsi de corréler les résultats obtenus par DRX et par pesée hydrostatique.

### Exemple 1.

Dans cet exemple, on prépare un échantillon de BAS, échantillon 1, par un procédé selon l'art antérieur dans lequel le traitement thermique est un double traitement dans un four tubulaire, à savoir un frittage en deux étapes dans un four tubulaire, et le BAS est préparé à partir de poudres de BaCO₃, SiO₂, et Al₂O₃.

Dans une première étape, un mélange de poudre de BaCO₃ et de poudre de SiO₂ préparé par dispersion dans de l'éthanol, puis séchage à de 120°C à 150°C, est traité thermiquement dans un four tubulaire sous air jusqu'à une température de 1150°C pendant 4h.

Les silicates obtenus à l'issue de la première étape sont ensuite mélangés à de la poudre d'alumine et le mélange obtenu est traité thermiquement dans un four tubulaire sous air à une température de 1200°C pendant 6h, moyennant quoi on obtient l'échantillon 1.

Les Figures 3A et 3B sont des micrographies, réalisées au microscope électronique à balayage d'une coupe de la pastille de BAS, échantillon 1, obtenue dans cet exemple.

La Figure 4 est un diffractogramme obtenu lors de l'analyse par DRX d'une de la pastille de BAS, échantillon 1, obtenue dans cet exemple.

Le Tableau 3 ci-dessous donne les résultats d'une analyse quantitative réalisée sur l'échantillon 1, préparé dans cet exemple, les quantités indiquées dans ce Tableau sont en pourcentages massiques.

**Tableau 3 : Analyse quantitative de l'échantillon 1.**

| Hexacelsian | Alumine | BaSi₂O₅ | Ba₅Si₈O₂₁ | Rwp |
|---|---|---|---|---|
| 49 | 23 | 6 | 22 | 17,9 |

Le matériau de l'échantillon 1 est très hétérogène. Les grains les plus sombres sur la Figure 3 sont des grains d'alumine. La matrice grise est le BaAl₂Si₂O₈ sous sa forme hexagonale. Les résidus clairs sont les silicates de baryum. Seulement une petite moitié du matériau est de l'hexacelsian, à savoir 49% en masse.

### Exemple 2.

Dans cet exemple, on prépare un échantillon de BAS, échantillon 2, par un procédé non conforme à l'invention dans lequel on réalise un frittage en une seule étape, par SPS selon le cycle présenté sur la Figure 2, d'un mélange de poudres de BaCO₃, SiO₂, et Al₂O₃ préparé par dispersion dans de l'éthanol, puis séchage à de 120°C à 150°C, que l'on peut qualifier de mélange de poudres classiques.

Les Figures 5A et 5B sont des micrographies, réalisées au microscope électronique à balayage d'une coupe de la pastille de BAS, échantillon 2, obtenue dans cet exemple.

La Figure 6 est un diffractogramme obtenu lors de l'analyse par DRX d'une de la pastille de BAS, échantillon 2, obtenue dans cet exemple.

Le Tableau 4 ci-dessous donne les résultats d'une analyse quantitative réalisée sur l'échantillon 2, préparé dans cet exemple, les quantités indiquées dans ce Tableau sont en pourcentages massiques.

**Tableau 4 : Analyse quantitative de l'échantillon 2.**

| Echantillon | Hexacelsian | Alumine | BaSi₂O₅ | Ba₅Si₈O₂₁ | Ba₂Si₃O₈ | Rwp |
|---|---|---|---|---|---|---|
| SPS Al₂O₃ | 10 | 40 | 5 | 23 | 22 | 19,8 |

Le matériau de l'échantillon 2 entre en fusion dès le début du palier à 1200°C. Il n'est pas possible d'achever le cycle thermique sur ce type d'échantillon. La partie fondue est essentiellement constituée de silicates de baryum alors que le coeur de la pastille (Figures 5A et 5B) est plus riche en composés alumineux.

### Exemple 3.

Dans cet exemple, on prépare un échantillon de BAS, l'échantillon 3, par un procédé non conforme à l'invention dans lequel on réalise un frittage en deux étapes dans un four tubulaire à partir de poudres de BaCO₃, SiO₂, et Al(OH)₃ dispersées dans de l'éthanol.

Dans une première étape, un mélange de poudre de BaCO₃ et de poudre de SiO₂ préparé par dispersion dans de l'éthanol, puis séchage à de 120°C à 150°C, est traité thermiquement dans un four tubulaire sous air à une température de 1150°C pendant 4h.

Les silicates obtenus à l'issue de la première étape sont ensuite mélangés à la poudre d'hydroxyde d'aluminium puis séchés en présence d'éthanol, et le mélange de poudres séché obtenu est traité thermiquement dans un four tubulaire sous air à une température de 1200°C pendant 6h, moyennant quoi on obtient l'échantillon 3.

Les Figures 7A et 7B sont des micrographies, réalisées au microscope électronique à balayage d'une coupe de la pastille de BAS, échantillon 3, obtenue dans cet exemple.

La Figure 8 est un diffractogramme obtenu lors de l'analyse par DRX d'une de la pastille de BAS, échantillon 3, obtenue dans cet exemple.

Le Tableau 5 ci-dessous donne les résultats d'une analyse quantitative réalisée sur l'échantillon 3, préparé dans cet exemple, les quantités indiquées dans ce Tableau sont en pourcentages massiques.

**Tableau 5 : Analyse quantitative de l'échantillon 3.**

| Hexacelsian | Alumine | BaSi₂O₅ | Ba₅Si₈O₂₁ | Ba_{0,79}Al_{10,9}O_{17,14} | Rwp |
|---|---|---|---|---|---|
| 50 | 13 | 5 | 22 | 10 | 33,7 |

La moitié du matériau de l'échantillon 3 est constituée de BAS sous forme hexagonale. L'autre moitié est constituée de divers résidus (Al₂O₃, BaSi₂O₅, BasSi₈O₂₁ et Ba_{0,79}Al_{10,9}O_{17,14}). Les résidus d'alumine sont sous forme de paquets. Ce sont les amas de matière les plus sombres des Figures 7A et 7B. Les parties claires des Figures 7A et 7B sont constituées des silicates de baryum. La phase de teinte intermédiaire des Figures 7A et 7B est le BaAl₂Si₂O₈.

### Exemple 4.

Dans cet exemple, on prépare un échantillon de BAS, l'échantillon 4, par le procédé selon l'invention dans lequel on réalise un frittage en une seule étape, par SPS selon le cycle présenté sur la Figure 2, d'un mélange de poudres de BaCO₃, SiO₂, et Al(OH)₃ dispersé dans de l'éthanol, puis séché.

Les Figures 9A et 9B sont des micrographies, réalisées au microscope électronique à balayage d'une coupe de la pastille de BAS, échantillon 4, obtenue dans cet exemple.

La Figure 11 est un diffractogramme obtenu lors de l'analyse par DRX d'une de la pastille de BAS, échantillon 4, obtenue dans cet exemple.

Le Tableau 6 ci-dessous donne les résultats d'une analyse quantitative, ne tenant compte que des phases cristallisées, réalisée sur l'échantillon 4, préparé dans cet exemple, et l'échantillon 5, préparé dans l'exemple 5, les quantités indiquées dans ce Tableau sont en pourcentages massiques.

**Tableau 6 : Analyse quantitative de l'échantillon 4 et de l'échantillon 5, ne tenant compte que des phases cristallisées.**

| Echantillon | Hexacelsian | Alumine | Ba_{0,79}Al_{10,9}O_{17,14} | Rwp |
|---|---|---|---|---|
| **4** | **98** | | **2** | **12,8** |
| 5 | 90 | 7 | 3 | 12,9 |

### Exemple 5.

Dans cet exemple, on prépare un échantillon de BAS, l'échantillon 5, par le procédé selon l'invention dans lequel on réalise un frittage en une seule étape, par SPS selon le cycle présenté sur la Figure 2, d'un mélange de poudres de BaCO₃, SiO₂, et Al(OH)₃ dispersé dans un milieu basique, à savoir de l'eau à pH 11 puis séché. Les Figures 10A et 10B sont des micrographies, réalisées au microscope électronique à balayage d'une coupe de la pastille de BAS, échantillon 5, obtenue dans cet exemple.

La Figure 12 est un diffractogramme obtenu lors de l'analyse par DRX d'une de la pastille de BAS, échantillon 5, obtenue dans cet exemple.

Le Tableau 7 ci-dessous donne les résultats d'une analyse quantitative, corrigée en tenant compte des phases amorphes, réalisée sur l'échantillon 5, préparé dans cet exemple, et l'échantillon 4, préparé dans l'exemple 4, les quantités indiquées dans ce Tableau sont en pourcentages massiques.

**Tableau 7 : Analyse quantitative de l'échantillon 5 et de l'échantillon 4; en tenant compte des phases amorphes.**

| Echantillon | Hexacelsian | Alumine | Ba_{0,79}Al_{10,9}O_{17,14} |
|---|---|---|---|
| 4 | 80 | 18 | 2 |
| 5 | 83 | 12 | 3 |

Un pointé EBSD dans les amas foncés de l'échantillon 4 montre qu'ils sont constitués d'alumine. Or en DRX cette alumine n'est pas détectée (Figure 11). Il est donc possible de conclure que cette alumine est amorphe. Les analyses quantitatives présentées dans le tableau 6 ne présentent que les taux dans les phases cristallisées.

L'analyse d'image sert ici à déterminer la quantité de grains sombres d'alumine et donc le taux de phase amorphe. L'analyse d'image a permis de déterminer que le taux d'alumine dans l'échantillon 4 et l'échantillon 5 sont respectivement 18% et 14% en volume. Les valeurs rapportées en masse sont inscrites dans le tableau 7, à savoir respectivement 18 et 12%.

Il est possible de constater que l'élaboration d'échantillons selon l'invention mène à une composition chimique majoritaire à plus de 80% en BAS de structure hexagonale. Les 20% restant sont majoritairement constitués d'alumine amorphe. Cette élaboration du BAS se fait en une seule étape par SPS à partir d'hydroxyde d'aluminium. L'utilisation d'un milieu basique lors du mélange des poudres permet d'obtenir une microstructure plus homogène de l'échantillon.

Les exemples fournis plus haut montrent clairement qu'il est possible de préparer du BAS par un procédé comprenant une seule étape de traitement thermique. Pour cela, il a été montré qu'il est nécessaire d'utiliser de l'hydroxyde d'aluminium et un frittage par SPS.

En effet, en utilisant classiquement un mélange de poudres contenant de l'alumine et un frittage classique dans un four tubulaire, on obtient un matériau très hétérogène constitué pour moitié seulement de BAS.

Si l'on utilise un mélange de poudres contenant de l'alumine avec un frittage par SPS, cela mène à la fusion du matériau.

Enfin si l'on utilise un mélange de poudres contenant de l'hydroxyde d'aluminium avec un frittage classique dans un four tubulaire, cela mène également à un échantillon très hétérogène.

La phase du BAS obtenue selon l'invention est hexagonale et il est possible pour l'homme de l'art d'effectuer un traitement thermique classique pour transformer la phase hexagonale en phase monoclinique.

### REFERENCES

[1] S.Boskovic, D.Kosanovic, Dj. Bahloul-Hourlier, P.Thomas, S.J. Kiss « Formation of celsian from mechanically activated BaCO3-Al2O3-SiO2 mixtures », Journal of Alloys and Compounds 290 (1999) 230-230.
[2] J.A Zaykoski, I.G. Talmy « Gallium and germanium substitutions in Celsian", Ceram. Eng. Sci. Proc. 15 (9-10) 1994, 779-786.
[3] S.S Amritphale, Avneesh Anshul, Navin Chandra, N. Ramakrishnan « Development of celsian ceramics from fly ash useful for X-ray radiation-shielding applications », Journal of the European Ceramic Society 27(2007) 4639-4647.
[4] A. Allemand, R. Billard, Y. Le Petitcorps « *Matériau composite à matrice en aluminosilicate, notamment en aluminosilicate de baryum « BAS » renforcée par des renforts en oxyde de métal, et son procédé de fabrication* », FR-A1-2998295 et [4A] WO-A1-2014/079837.
[5] C.H. Drummond, N.P. Bansal, « Crystallization behaviour and properties of BaO Al2O3 2SiO2 glass matrices », Ceramic Engineering and Science Procedings Vol. 11, issue 7-8, pt 1, July 1990.
[6] G.N. Shabanova, V.V.Taranenkova, A.N. Korogodskaya, and E.V. Khristich, « Structure of the BaO -Al2O3 -SiO2 system (a review) », Translated from Steklo in Keramika, No. 2, pp. 12 -15, February, 2003.
[7] Feng Ye, Limeng Liu, Jingxian Zhang, Qingchang Meng « Synthesis of 30 wt%BAS/Si3N4 composite by Spark Plasma Sintering », Composites Science and Technology 68, 1073-1079, 2008.
[8] A. Kremenovic, Ph. Colomban, B. Piriou, D. Massiot, P. Florian, « Structural and spectroscopic characterization of the quenched Hexacelsian », Journal of Physics and Chemistry of Solids 64, 2253-2268, 2003.
[9] Kuo-Tong Lee, Pranesh B.Aswarth « Enhanced production of celsian barium aluminosilicates by a three step firing process », Materials Chemistry and Physics 71 (2001) 47-52.
[10] Kuo-Tong Lee, Pranesh B. Aswath « Synthesis of hexacelsian barium aluminosilicate by a solid state process », Journal of the American Ceramic Society, 83 (12) 2907-12, 2000.
[11] I.G Talmy, D.A Haught. « Celsian-based (BaO.Al2O3.2SiO2) ceramics as candidates for radomes », Proceedings of the 14th conférence on metal carbon and ceramic composites, NASA Conf. Publ. 3097 Partl; 1990. p. 239-50.
[12] D. Long-Gonzalez, J. Lopez-Cuevas « Synthesis of monoclinic Celsian from CFA by using a one step solid state reaction process » Ceramics International 36 (2010) 661-672.
[13] Nagamine Shogo, Kato Yasuyoshi, Konishi Kunihitko, Tejima Nobue « *Production of carrier for combustion catalyst* » JP-A-S62-71535 du 02/04/1987.

## Revendications

1. Procédé de préparation d'un matériau à base d'un aluminosilicate comprenant 80% en masse ou plus, de préférence 100% en masse d'un aluminosilicate choisi parmi l'aluminosilicate de baryum BAS, l'aluminosilicate de baryum et de strontium BSAS, et l'aluminosilicate de strontium SAS, ledit aluminosilicate étant constitué d'aluminosilicate de structure hexagonale, **caractérisé en ce qu'**il comprend une seule étape de frittage dans laquelle on réalise le frittage d'un mélange de poudres de précurseurs dudit aluminosilicate, comprenant une poudre d'hydroxyde d'aluminium Al(OH)₃, par une technique de frittage à chaud avec un champ électrique pulsé SPS ; moyennant quoi on obtient un matériau à base d'un aluminosilicate, ledit aluminosilicate étant constitué d'aluminosilicate de structure hexagonale.

2. Procédé selon la revendication 1, dans lequel les poudres de précurseurs autres que la poudre d'hydroxyde d'aluminium Al(OH)₃ sont choisies parmi les poudres de carbonate de baryum BaCO₃, de silice SiO₂, et de carbonate de strontium.

3. Procédé selon la revendication 2, dans lequel l'aluminosilicate est l'aluminosilicate de baryum BAS, et le mélange de poudres de précurseurs comprend, de préférence consiste en, un mélange d'une poudre de carbonate de baryum BaCO₃, d'une poudre de silice SiO₂, et d'une poudre d'hydroxyde d'aluminium Al(OH)₃, de préférence, le rapport molaire de la poudre de carbonate de baryum BaCO₃, de la poudre de silice SiO₂, et de la poudre d'hydroxyde d'aluminium Al(OH)₃ dans le mélange de poudres de précurseurs est de 1 mole de BaCO₃ pour 2 moles de silice SiO₂, et 2 moles d'hydroxyde d'aluminium Al(OH)₃.

4. Procédé selon l'une quelconque des revendications précédentes, dans lequel le mélange de poudres de précurseurs, par exemple le mélange de la poudre de carbonate de baryum BaCO₃, de la poudre de silice SiO₂, et de la poudre d'hydroxyde d'aluminium Al(OH)₃ est préparé en mettant en suspension les poudres dans un solvant, en homogénéisant la suspension, et en séchant la suspension.

5. Procédé selon l'une quelconque des revendications précédentes, dans lequel le solvant est choisi parmi les alcools, de préférence parmi les alcools aliphatiques de 1 à 10C, tels que l'éthanol ; l'eau ; et leurs mélanges.

6. Procédé selon la revendication 5, dans lequel le solvant est de l'eau à un pH basique, de préférence à un pH de 10 à 12, par exemple 11 ; de préférence, l'eau à un pH basique contient une base, qui est de préférence l'ammoniaque.

7. Procédé selon l'une quelconque des revendications 1 à 5, dans lequel le solvant est de l'eau à un pH acide, par exemple un pH de 4.

8. Procédé selon l'une quelconque des revendications précédentes, dans lequel, lors du frittage, on observe un premier palier à une première température pour éliminer l'eau contenue dans l'hydroxyde d'aluminium Al(OH)₃, un deuxième palier éventuel à une deuxième température pour former des composés intermédiaires, et un troisième palier à une troisième température pour former l'aluminosilicate, tel que le BAS.

9. Procédé selon la revendication 8, dans lequel :
- le premier palier est réalisé à une température de 900°C à 1000°C, par exemple de 900°C, pendant une durée de 1 à 5 minutes, par exemple de 1 minute ;
- le deuxième palier est réalisé à une température de 1100°C à 1200°C, par exemple de 1100°C, pendant une durée de 0 à 20 minutes, de préférence de 1 à 20 minutes, par exemple de 10 minutes ;
- le troisième palier est réalisé à une température de 1200°C à 1700°C, par exemple de 1200°C, pendant une durée de 1 à 20 minutes, par exemple de 10 minutes.

10. Procédé selon l'une quelconque des revendications précédentes, dans lequel le matériau à base d'un aluminosilicate est dense, homogène, et non fissuré.

11. Procédé selon l'une quelconque des revendications précédentes, qui comprend en outre une étape au cours de laquelle le matériau à base d'un aluminosilicate, constitué d'aluminosilicate de structure hexagonale, est traité thermiquement pour transformer l'aluminosilicate de structure hexagonale en aluminosilicate de structure orthorhombique, ou en aluminosilicate de structure monoclinique.

12. Procédé de préparation d'un matériau composite, constitué par une matrice en au moins un aluminosilicate, renforcée par des renforts en au moins un oxyde de métal ou de métalloïde dont le coefficient de dilatation est voisin de celui du au moins un aluminosilicate, à savoir le coefficient de dilatation de l'oxyde de métal ou de métalloïde diffère du coefficient de dilatation de l'aluminosilicate de pas plus de 10%, de préférence de pas plus de 5%, de préférence encore de pas plus de 1% ; procédé dans lequel on réalise les étapes successives suivantes :
a) on prépare un matériau à base d'un aluminosilicate par le procédé selon l'une quelconque des revendications 1 à 11, et on prépare une poudre dudit matériau à base d'un aluminosilicate ;
b) on met en contact la poudre du matériau à base d'un aluminosilicate, avec des renforts en au moins un oxyde de métal ou de métalloïde dont le coefficient de dilatation est voisin de celui de l'aluminosilicate ;
c) on réalise un frittage de la poudre du matériau à base d'un aluminosilicate et des renforts en au moins un oxyde de métal ou de métalloïde par un procédé de frittage à chaud avec un champ électrique pulsé ;
d) on refroidit la poudre et les renforts frittés ;
e) on récupère le matériau composite.

13. Procédé selon la revendication 12, dans lequel l'aluminosilicate est l'aluminosilicate de baryum BAS.

14. Procédé selon l'une quelconque des revendications 12 à 13, dans lequel l'aluminosilicate, tel que le BAS, est constitué par de l'aluminosilicate tel que du BAS, de structure hexagonale ; de préférence, les renforts sont en alumine.

15. Procédé selon l'une quelconque des revendications 12 à 13, dans lequel l'aluminosilicate, tel que le BAS, est constitué par de l'aluminosilicate tel que du BAS, de structure monoclinique ; de préférence, les renforts sont en silice et/ou en mullite.

16. Procédé selon l'une quelconque des revendications 12 à 15, dans lequel les renforts en au moins un oxyde de métal ou de métalloïde se présentent sous une ou plusieurs forme(s) choisie(s) parmi les particules telles que les fibres longues et les fibres courtes aussi appelées trichites ou whiskers ; et les tissus de fibres.

17. Procédé selon la revendication 16, dans lequel lors de l'étape b) on prépare un mélange de la poudre d'un aluminosilicate, telle que de la poudre d'aluminosilicate de baryum, et de particules en au moins un oxyde de métal ou de métalloïde ; ou bien, lors de l'étape b) on imprègne un tissu de fibres en au moins un oxyde de métal ou de métalloïde par une barbotine de la poudre d'au moins un aluminosilicate, telle que de la poudre d'aluminosilicate de baryum.

## Patentansprüche

1. Verfahren zum Herstellen eines Materials auf der Basis eines Aluminosilikats, enthaltend 80 Masse-% oder mehr, vorzugsweise 100 Masse-% eines Aluminosilikats, ausgewählt aus Bariumaluminosilikat BAS, Barium- und Strontiumaluminosilikat BSAS und Strontiumaluminosilikat SAS, wobei das Aluminosilikat aus Aluminosilikat mit hexagonaler Struktur besteht, **dadurch gekennzeichnet, dass** es einen einzigen Sinterschritt umfasst, bei dem das Sintern eines Gemischs aus Pulvern von Vorläufern des Aluminosilikats erfolgt, enthaltend ein Pulver aus Aluminiumhydroxid Al(OH)₃, durch eine Heißsintertechnik mit einem gepulsten elektrischen Feld SPS ("Spark Plasma Sintering"); wodurch ein Material auf Basis eines Aluminosilikats erhalten wird, wobei das Aluminosilikat aus Aluminosilikat mit hexagonaler Struktur besteht.

2. Verfahren nach Anspruch 1, wobei die anderen Vorläuferpulver als das Pulver aus Aluminiumhydroxid Al(OH)₃ ausgewählt sind aus Pulvern aus Bariumcarbonat BaCO₃, Siliciumdioxid SiO₂ und Strontiumcarbonat.

3. Verfahren nach Anspruch 2, wobei das Aluminosilikat Bariumaluminosilikat BAS ist und das Gemisch aus Vorläuferpulvern ein Gemisch aus einem Pulver aus Bariumcarbonat BaCO₃, einem Pulver aus Siliciumdioxid SiO₂ und einem Pulver aus Aluminiumhydroxid Al(OH)₃ enthält, vorzugsweise daraus besteht, und wobei vorzugsweise das Molverhältnis von dem Pulver aus Bariumcarbonat BaCO₃, dem Pulver aus Siliciumdioxid SiO₂ und dem Pulver aus Aluminiumhydroxid Al(OH)₃ in dem Gemisch aus Vorläuferpulvern 1 Mol BaCO₃ für 2 Mol Siliciumdioxid SiO₂ und 2 Mol Aluminiumhydroxid Al(OH)₃ beträgt.

4. Verfahren nach einem der vorangehenden Ansprüche, wobei das Gemisch aus Vorläuferpulvern, beispielsweise das Gemisch aus dem Pulver aus Bariumcarbonat BaCO₃, dem Pulver aus Siliciumdioxid SiO₂ und dem Pulver aus Aluminiumhydroxid Al(OH)₃ hergestellt wird, indem die Pulver in einem Lösungsmittel in Suspension gebracht werden, die Suspension homogenisiert wird und die Suspension getrocknet wird.

5. Verfahren nach einem der vorangehenden Ansprüche, wobei das Lösungsmittel ausgewählt ist aus Alkoholen, vorzugsweise aus aliphatischen Alkoholen mit 1 bis 10C, wie Ethanol; Wasser; und deren Gemischen.

6. Verfahren nach Anspruch 5, wobei das Lösungsmittel Wasser mit einem basischen pH-Wert, vorzugsweise einem pH-Wert von 10 bis 12, beispielsweise von 11 ist; wobei vorzugsweise das Wasser mit einem basischem pH-Wert eine Base enthält, die vorzugsweise Ammoniak ist.

7. Verfahren nach einem der Ansprüche 1 bis 5, wobei das Lösungsmittel Wasser mit einem sauren pH-Wert, beispielsweise einem pH-Wert von 4, ist.

8. Verfahren nach einem der vorangehenden Ansprüche, wobei bei dem Sintern eine erste Stufe mit einer ersten Temperatur zum Beseitigen von in dem Aluminiumhydroxid Al(OH)₃ enthaltenem Wasser, eine gegebenenfalls zweite Stufe mit einer zweiten Temperatur zum Bilden von Zwischenverbindungen und eine dritte Stufe mit einer dritten Temperatur zum Bilden von Aluminosilikat, wie etwa BAS, zu beobachten sind.

9. Verfahren nach Anspruch 8, wobei
- die erste Stufe bei einer Temperatur von 900 °C bis 1000 °C, beispielsweise von 900 °C, für eine Zeitdauer von 1 bis 5 Minuten, beispielsweise von 1 Minute, erfolgt;
- die zweite Stufe bei einer Temperatur von 1100 °C bis 1200 °C, beispielsweise von 1100 °C, für eine Zeitdauer von 0 bis 20 Minuten, vorzugsweise von 1 bis 20 Minuten, beispielsweise von 10 Minuten, erfolgt;
- die dritte Stufe bei einer Temperatur von 1200 °C bis 1700 °C, beispielsweise von 1200 °C, für eine Zeitdauer von 1 bis 20 Minuten, beispielsweise von 10 Minuten, erfolgt.

10. Verfahren nach einem der vorangehenden Ansprüche, wobei das Material auf Basis von einem Aluminosilikat dicht, homogen und rissfrei ist.

11. Verfahren nach einem der vorangehenden Ansprüche, wobei es ferner einen Schritt umfasst, bei dem das Material auf Basis von einem Aluminosilikat, bestehend aus Aluminosilikat mit hexagonaler Struktur, wärmebehandelt wird, um das Aluminosilikat mit hexagonaler Struktur in ein Aluminosilikat mit orthorhombischer Struktur oder in Aluminosilikat mit monoklinischer Struktur umzuwandeln.

12. Verfahren zum Herstellen eines Verbundmaterials, bestehend aus einer Matrix aus zumindest einem Aluminosilikat, verstärkt mit Verstärkungen aus zumindest einem Metall- oder Metalloidoxid, dessen Ausdehnungskoeffizient nahe bei dem des zumindest einen Aluminosilikats liegt, nämlich der Ausdehnungskoeffizient von dem Metall- oder Metalloidoxid sich von dem Ausdehnungskoeffizient von dem Aluminosilikat um nicht mehr als 10 %, vorzugsweise um nicht mehr als 5 %, weiter bevorzugt um nicht mehr als 1 % unterscheidet; bei welchem Verfahren die nachstehende, aufeinanderfolgende Schritte ausgeführt werden:
a) Herstellen eines Materials auf Basis von einem Aluminosilikat mit dem Verfahren nach einem der Ansprüche 1 bis 11 und Herstellen eines Pulvers aus dem Material auf Basis von einem Aluminosilikat;
b) Inkontaktbringen des Pulvers aus dem Material auf Basis von einem Aluminosilikat mit Verstärkungen aus zumindest einem Metall- oder Metalloidoxid, dessen Ausdehnungskoeffizient nahe bei dem des Aluminosilikats liegt;
c) Durchführen von einem Sintern des Pulvers aus dem Material auf Basis von einem Aluminosilikat und der Verstärkungen aus zumindest einem Metall- oder Metalloidoxid mit einem Heißsinterverfahren mit gepulstem elektrischen Feld ("Spark Plasma Sintering");
d) Abkühlen des gesinterten Pulvers und der gesinterten Verstärkungen;
e) Gewinnen des Verbundmaterials.

13. Verfahren nach Anspruch 12, wobei das Aluminosilikat ein Bariumaluminosilikat BAS ist.

14. Verfahren nach einem der Ansprüche 12 bis 13, wobei das Aluminosilikat, wie etwa das BAS, aus Aluminosilikat, wie etwa BAS, mit hexagonaler Struktur besteht; wobei vorzugsweise die Verstärkungen aus Aluminiumoxid bestehen.

15. Verfahren nach einem der Ansprüche 12 bis 13, wobei das Aluminosilikat, wie etwa das BAS, aus Aluminosilikat, wie etwa BAS, mit monoklinischer Struktur besteht; wobei vorzugsweise die Verstärkungen aus Siliciumdioxid und/oder Mullit bestehen.

16. Verfahren nach einem der Ansprüche 12 bis 15, wobei die Verstärkungen aus zumindest einem Metall- oder Metalloidoxid unter einer oder mehreren Formen, ausgewählt aus Teilchen, wie lange Fasern und kurze Fasern, auch Trichits oder Whiskers genannt; und Fasergeweben vorliegen.

17. Verfahren nach Anspruch 16, wobei in Schritt b) ein Gemisch aus dem Pulver eines Aluminosilikats, wie etwa aus dem Pulver von Bariumaluminosilikat, und Teilchen aus zumindest einem Metall- oder Metalloidoxid hergestellt wird; oder aber in Schritt b) ein Fasergewebe aus zumindest einem Metall- oder Metalloidoxid mit einem Schlicker aus dem Pulver von zumindest einem Aluminosilikat, wie etwa aus dem Pulver von Bariumaluminosilikat, getränkt wird.

## Claims

1. A method for preparing a material based on an aluminosilicate comprising 80% by mass or more, preferably 100% by mass of an aluminosilicate selected from among barium aluminosilicate BAS, barium and strontium aluminosilicate BSAS, and strontium aluminosilicate SAS, said aluminosilicate consisting of aluminosilicate with a hexagonal structure, **characterized in that** it comprises a single sintering step wherein the sintering of a mixture of powders of precursors of said aluminosilicate, comprising an aluminum hydroxide powder Al(OH)₃ is carried out, by a hot sintering technique with a pulsed electric field SPS ("Spark Plasma Sintering"); whereby a material based on an aluminosilicate, said aluminosilicate consisting of aluminosilicate with a hexagonal structure is obtained.

2. The method according to claim 1, wherein the powders of precursors other than the aluminium hydroxide powder Al(OH)₃ are selected from among powders of barium carbonate BaCO₃, of silica SiO₂, and of strontium carbonate.

3. The method according to claim 2, wherein the aluminosilicate is barium aluminosilicate BAS, and the mixture of the powders of precursors comprises, preferably consists of, a mixture of a barium carbonate BaCO₃ powder, of a silica powder SiO₂, and of an aluminium hydroxide Al(OH)₃ powder, preferably, the molar ratio of the barium carbonate BaCO₃ powder, of the silica powder SiO₂, and of the aluminium hydroxide Al(OH)₃ powder in the mixture of the powders of precursors is 1 mole of BaCO₃ for 2 moles of silica SiO₂ and 2 moles of aluminium hydroxide Al(OH)₃.

4. The method according to any one of the preceding claims, wherein the mixture of the powders of precursors, for example the mixture of the barium carbonate BaCO₃ powder, of the silica SiO₂ powder, and of the aluminium hydroxide Al(OH)₃ powder is prepared by suspending the powders in a solvent, by homogenizing the suspension, and by drying the suspension.

5. The method according to any one of the preceding claims, wherein the solvent is selected from among alcohols, preferably from among aliphatic alcohols of 1 to 10 C, such as ethanol; water; and mixtures thereof.

6. The method according to claim 5, wherein the solvent is water at a basic pH, preferably at a pH from 10 to 12, for example 11; preferably, the water at a basic pH contains a base, which is preferably ammonia.

7. The method according to any one of claims 1 to 5, wherein the solvent is water at an acid pH, for example a pH of 4.

8. The method according to any one of the preceding claims, wherein, during sintering, a first plateau is observed at a first temperature for removing water contained in the aluminium hydroxide Al(OH)₃, a second optional plateau is observed at a second temperature for forming intermediate compounds, and a third plateau is observed at a third temperature for forming the aluminosilicate, such as BAS.

9. The method according to claim 8, wherein:
- The first plateau is carried out at a temperature from 900°C to 1,000°C, for example 900°C, for a duration from 1 to 5 minutes, for example of 1 minute;
- The second plateau is carried out at a temperature from 1,100°C to 1,200°C, for example 1,100°C, for a duration from 0 to 20 minutes, preferably from 1 to 20 minutes, for example 10 minutes;
- The third plateau is carried out at a temperature from 1,200°C to 1,700°C, for example 1,200°C, for a duration from 1 to 20 minutes, for example 10 minutes.

10. The method according to any one of the preceding claims, wherein the material based on an aluminosilicate is dense, homogeneous, and non-cracked.

11. The method according to any one of the preceding claims, which further comprises a step during which the material based on an aluminosilicate, consisting of aluminosilicate with a hexagonal structure is heat-treated for transforming the aluminosilicate with a hexagonal structure into an aluminosilicate with an orthorhombic structure, or to an aluminosilicate with a monoclinic structure.

12. A method for preparing a composite material, consisting of a matrix made of at least one aluminosilicate, reinforced with reinforcements made of at least one metal or metalloid oxide for which the thermal expansion coefficient is close to that of said at least one aluminosilicate, namely the thermal expansion coefficient of the metal or metalloid oxide differs from the thermal expansion coefficient of the aluminosilicate by not more than 10%, preferably by not more than 5%, still preferably by not more than 1%; process wherein the following successive steps are carried out:
a) a material based on an aluminosilicate is prepared by the method according to any one of claims 1 to 13, and a powder of said material based on an aluminosilicate is prepared;
b) the powder of the material based on an aluminosilicate is put into contact with reinforcements made of least one metal or metalloid oxide, for which the thermal expansion coefficient is close to that of the aluminosilicate;
c) sintering of the powder of the material based on an aluminosilicate and of the reinforcements made of at least one metal or metalloid oxide is achieved by a hot sintering method with a pulsed electric field ("Spark Plasma Sintering");
d) the sintered powder and reinforcements are cooled;
e) the composite material is recovered.

13. The method according to claim 12, wherein the aluminosilicate is barium aluminosilicate BAS.

14. The method according to any one of claim 12 to 13, wherein the aluminosilicate, such as BAS, consists of an aluminosilicate such as BAS, of hexagonal structure; preferably, the reinforcements are made of alumina.

15. The method according to any one of claims 12 to 13, wherein the aluminosilicate, such as BAS, consists of an aluminosilicate such as BAS of monoclinic structure; preferably, the reinforcements are made of silica and/or made of mullite.

16. The method according to any one of claims 12 to 15, wherein the reinforcements made of at least one metal or metalloid oxide appear in one or several form(s) selected from among particles such as long fibers and short fibers also called trichites or whiskers; and fiber fabrics.

17. The method according to claim 20, wherein during step b) a mixture of the powder of an aluminosilicate, such as a powder of barium aluminosilicate, and of particles made of at least one metal or metalloid oxide is prepared; or, during step b) a fiber fabric made of at least one metal or metalloid oxide is impregnated with a slurry of the powder of at least one aluminosilicate, such as barium aluminosilicate powder.
